(19) Europäisches Patentamt
European Patent Office
Office européen des brevets

(11) **EP 2 578 992 B1**

(12) **EUROPÄISCHE PATENTSCHRIFT**

(45) Veröffentlichungstag und Bekanntmachung des Hinweises auf die Patenterteilung:
**25.01.2017   Patentblatt 2017/04**

(51) Int Cl.:
***G01C 19/38*** *(2006.01)*

(21) Anmeldenummer: **11184180.5**

(22) Anmeldetag: **06.10.2011**

(54) **Geographisch nordreferenzierte Azimutbestimmung**

Geographical azimuth determination referenced to north

Détermination d'azimut géographiquement référencé au nord

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**10.04.2013   Patentblatt 2013/15**

(73) Patentinhaber: **Vectronix AG**
**9435 Heerbrugg (CH)**

(72) Erfinder: **Gnepf, Silvio**
**CH-9435 Heerbrugg (CH)**

(74) Vertreter: **Kaminski Harmann**
**Patentanwälte AG**
**Landstrasse 124**
**9490 Vaduz (LI)**

(56) Entgegenhaltungen:
**EP-A1- 0 250 608      EP-A2- 0 790 485**
**CA-A1- 1 269 874      DE-A1- 3 141 405**

**Beschreibung**

Die Erfindung betrifft einen nordreferenzierbaren Goniometer zur azimutalen Ausrichtungsbestimmung einer Anzieleinrichtung nach dem Oberbegriff des Anspruchs 1 sowie ein Verfahren zur Azimutwinkelbestimmung relativ zum geographischen Nordpol nach dem Oberbegriff des Anspruchs 10.

Eine genaue Referenzierung zur Nordrichtung ist in vielfältigen Anwendungsfällen erforderlich. Beispielsweise im Bereich der Navigation und Orientierung, der Vermessung und Beobachtung ist eine (im Rahmen der angestrebten Messgenauigkeiten) möglichst exakte Nordreferenz gefordert. Speziell im Feld - oftmals unter widrigen Umgebungsbedingungen bezüglich Temperatur, Wind und Wetter - soll dabei, beispielsweise zur kartographischen Orientierung oder Lokalisierung eines Ziels, die Nordrichtung als Bezugsreferenz bei der Bestimmung des Azimut-Winkels bekannt sein. Im Folgenden wird dabei speziell eine erdgebundene Bestimmung der Nordrichtung beschrieben, welche nicht zur Navigation in sich bewegenden Land-, Luftoder See-Fahrzeugen, gedacht ist. Zwar lassen sich die hier beschriebenen Prinzipien - insbesondere bezüglich der verwendeten Methoden und Kompensationsverfahren - grundsätzlich auch bei sich in Bewegung befindlichen Goniometern nutzen, jedoch wären hierbei weiterführende, komplexere Ansätze erforderlich, insbesondere bezüglich der mathematischen Signalauswertung sowie eine entsprechend schnelle und synchrone Signalerfassung.

Die vorliegende Erfindung betrifft primär eine Nordfindung in Goniometern, welche auf erdgebundenem, zumindest annähernd festem und unbeweglichem Untergrund aufgestellt sind, sodass die beschriebenen Messungen in festem Bezug zum Erdkoordinatensystem durchgeführt werden. Diese erdgebundenen Geräte können aber dennoch - ausserhalb der Messeinsätze - mobil im Sinne von tragbar sein, also auch für Standortwechsel geeignet sein. Daraus resultierende Anforderungen sind beispielsweise geringes Gewicht, Robustheit, Batteriebetrieb, schnelles und einfaches Aufstellen und Einrichten, Bestimmen der Nordreferenz in kurzer Zeit, etc.

Beispielsweise stellt die vorliegende Erfindung eine Nordfindung in Form eines azimutal drehbaren, nordreferenzierbaren Untersatzes für eine Anzieleinheit, wie etwa eines Beobachtungs- oder Messgeräts, zur Verfügung, mit dessen Hilfe eine Beobachtung bzw. Messung um eine zuverlässige und genaue Nordreferenzierung erweitert oder ergänzt werden kann.

Als einer der möglichen Anwendungsfälle sei hierzu ein Stativ bzw. ein Stativaufsatz genannt, dessen vertikale Drehachse (in der Vermessung auch als Stehachse bezeichnet) über eine entsprechend der Erfindung nordreferenzierbare Winkelmessung verfügt. Auf diesem Stativ bzw. Stativaufsatz können dann unterschiedliche Beobachtungsgeräte, etwa Binokulare, Monokulare, Kameras, Entfernungsmesser, Nachtsichtgeräte, kleinere Waffensysteme, etc. montiert werden. Die erfindungsgemässe nordrefernzierte Azimutwinkelmessung kann alternativ aber auch in die Anzieleinrichtung integriert sein, sodass dessen drehbare Basis nur noch erdverbunden aufgestellt werden muss. Durch entsprechende Datenschnittstellen können Informationen der Anzieleinrichtung, des erfindungsgemässen Azimutwinkelmessers sowie anderer Geräte verknüpft werden. Beispielsweise kann die nordreferenzierte Azimut-Ausrichtung gemeinsam mit einer Elevationsmessung und einer Entfernungsmessung zur Bestimmung von Zielkoordinaten eines angezielten Objekts benutzt werden. Ist weiters, beispielsweise über GPS, der eigene Standort bekannt, können die Ziel koordinaten auch in einem kartographischen Koordinatensystem bestimmt werden.

Magnetische Kompassausrichtungen sind für derartige Zwecke meist zu ungenau und auch die bekannten Effekte der Deklination und Deviation sowie deren Störbarkeit durch Einflüsse externer magnetischer und elektromagnetischer Felder, erlauben meist nur bedingt genaue Nordweisungen. Zudem ist die zu erwartende Genauigkeit einer Magnetkompassmessung nicht vorherbestimmbar, und auch anhand der Messung selbst kann nicht auf deren Genauigkeit geschlossen werden. Speziell in Gebäuden, Stahlkonstruktionen, Tunneln oder unterirdischen Einrichtungen sowie in der Nähe von elektrischen Anlagen, ist eine hinreichend genaue Magnetkompassmessung vielfach nicht möglich.

Neben einer magnetischen Nordfindung, ist auch eine Nordfindung durch Bestimmung der Erddrehachse bekannt, welche per Definition den geographischen Nord- und Südpol verbindet. Dieses Grundprinzip ist schon seit der Entdeckung des zugrunde liegenden Effekts im Jahre 1817, insbesondere seit der Entdeckung des Foucaultschen Pendels durch Jean Bernard Leon Foucault im Jahre 1851 und der Erfindung des Kreiselkompasses im Jahre 1852 bekannt, worauf auch im Jahre 1876 William Thomson einen entsprechenden Kompass patentierte. Die hierbei zugrunde gelegten physikalischen Prinzipien sind somit in ihrer Basis aus Lehr- und Geschichtsbüchern hinreichend bekannt.

Technisch nutzbar wurde das Prinzip in jüngerer Zeit vor allem durch Weiterentwicklungen im Bereich von gyroskopischen Sensoren - vom Kreisel-Gyroskop zum Laserring-, Faser- bis hin zu den heute bekannten MEMS-Gyroskopen, wie etwa den Vibrationsgyroskopen, beispielsweise nach dem HRG-Prinzip (=Hemispherical Resonant Gyroscope) oder anderen bekannten Gyroskop-Technologien. Durch die stetige Verringerung der Baugrösse und des Gewichts unter Verbesserung der Messgenauigkeit und Zuverlässigkeit, ist der Einsatz von Gyroskopen auch in tragbaren oder mobilen Geräten attraktiv geworden. Die zugrunde liegenden Messprinzipien sind dabei im Grunde jedoch sehr alt, wurde aber immer wieder an die im Stand der Technik verfügbaren Komponenten und elektronischen Auswerte- und Datenverarbeitungskomponenten und deren Charakteristika angepasst.

US 4,945,647 zeigt etwa ein Gyrokompass-System für erdgebunden aufgestellte Gerätschaften. Mithilfe eines hochgenauen Inertiasensors wird dabei eine "schnelle" und genaue Nordfindung erzielt, welche tolerant gegenüber Vibrationen und Setzungen des Gerätes ist. Darin ist ein Ringlaser-Gyroskop auf einer drehbaren Plattform angeordnet, wobei die Sensitivitätsachse des Gyroskops orthogonal zur Drehachse liegt. Eine allfällige Schräglage der Plattform wird in zwei Achsen mittels Beschleunigungssensoren gemessen und entsprechend bei den Berechnungen berücksichtigt. Die drehbare Plattform mit dem Gyroskop befindet sich dabei in einem geschlossenen Gehäuse und wird von einem Motor zwischen den Messungen um jeweils 90 Grad rotiert.

Auch EP 0 250 608 beschreibt ein Verfahren zur Azimut-Winkelbestimmung, bei welcher mittels eines Beschleunigungsmessers sowohl eine horizontale Ausrichtung der Drehplattform durchgeführt, als auch ein allfälliges Einsinken während der Messung detektiert bzw. numerisch kompensiert werden kann. Um die geforderte Genauigkeit zu erreichen, wird die Messung in jeweils um 180° gedrehter Position mehrfach wiederholt und gemittelt.

DE3141405 beschreibt Verfahren zur Azimut-Winkelbestimmung mit Hilfe eines auf dem Fernrohr eines Theodoliten angebrachten Kreiselkompasses, bei dem ebenfalls mehrere Messungen in um 180° gedrehter Position durchgeführt werden.

In EP 2 239 540 wird ein Gerät mit einem Gyroskop zur Montage auf einem genau nivellierten Goniometer beschrieben. Mittels zwei gyroskopischen Messungen in zwei um 90 Grad rotierten Gyroskopstellungen kann das Gerät die Rotationsachse der Erde bestimmen.

CA 1 269 874 beschreibt einen Gyrokompass mit einer Messung in drei, jeweils um 120° versetzten Lagen mit einem Einzelgyroskop auf einer motorisiert beweglicher Plattform welche durch eine kardanische Aufhängung nivelliert ist. Mithilfe von Neigungssensoren und Messung der Drehlage der kardanischen Aufhängung mit Winkelmessern wird weiters die Horizontalausrichtung des Kompasses bestimmt.

EP 0 790 485 zeigt ein Gerät zur Bestimmung der Nordrichtung und zur Kurshaltung. Dabei ist in einem Gehäuse ein Faserkreisel auf einem Positionierrahmen angeordnet, der gegenüber dem Gehäuse durch einen Motor um eine Hochachse drehbar ist. Die Messachse des Faserkreisels bildet mit einer zur Hochachse senkrechten Ebene einen Elevationswinkel $\sigma$. Der im Gehäuse motorisch bewegte Positionierrahmen ist in drei festen, durch eine mechanische Arretier-Einrichtung festgelegten Positionen einrastbar. Zur Bestimmung der Neigung der Inertialsensor-Anordnung sind zwei Beschleunigungsmesser mit zueinander gekreuzten Empfindlichkeitsachsen vorgesehen.

Es sind auch Gerätschaften bekannt, welche mit mehreren, vorzugsweise orthogonal angeordneten Gyroskopen die Nordrichtung bestimmen. Es ist theoretisch auch möglich, mit nur einem einzigen, nicht drehbaren Gyroskop die Nordrichtung zu bestimmen (genauso genommen wird dabei die Ost-West Richtung bestimmt), jedoch erfordert dies zur Erzielung hinreichender Winkelgenauigkeiten auch hochpräzise Gyroskope, insbesondere mit sehr geringem Rauschen, Driften und Bias, welche kostenintensiv, gross und schwer sind, und daher speziell für kostengünstige, portable Geräte für den Feldeinsatz ungeeignet sind.

Es ist daher eine Aufgabe der vorliegenden Erfindung, einen verbesserten nordreferenzierbaren Azimutwinkelmesser, insbesondere für den Feldeinsatz, bereitzustellen.

Eine weitere Aufgabe ist dabei Erzielung hinreichender Genauigkeiten, z.B. in der Grössenordnung von 1 MIL, unter der Verwendung von kostengünstigen Sensoren, speziell Gyroskopen, der niedrigeren Genauigkeitslassen ("Tactical Grade Gyros").

Es ist dabei auch eine Aufgabe eine Nordreferenzierung mit der entsprechenden Genauigkeit auch in kurzer Zeit, vorzugsweise in einigen wenigen Minuten oder darunter zu erzielen.

Eine weitere Aufgabe ist es einen Azimutwinkelmesser bereitzustellen, welcher eine einfache und schnelle Aufstellung erlaubt, insbesondere welcher ohne eine exakte Horizontalausrichtung aufgestellt werden kann.

Es ist auch eine Aufgabe, möglichst wenige, leichte und kleine Komponenten zu verwenden, um eine hohe Mobilität und robuste Konstruktion für den Feldeinsatz zu erzielen. So soll im Gegensatz zu einer vollwertigen 6-DOF-Navigationseinheit nur ein einzelnes Gyroskop verwendet werden. Auch auf elektromagnetische Motoren soll dabei verzichtet werden, um ein kleines, leichtes, kostengünstiges und Robustes Goniometer zu erhalten.

Auch das Bereitstellen einer fehlertoleranten bzw. fehlersicheren Methode zur Azimutwinkelbestimmung relativ zum geographischen Nordpol ist eine Aufgabe, insbesondere wobei eine bekannte, bzw. bestimmbare Ausrichtungsgenauigkeit erzielt wird, beispielsweise in Form eines Genauigkeitserwartungswertes.

Es ist auch eine Aufgabe einen Azimutwinkelmesser mit einer Online - Statusüberwachung bereitzustellen, welcher im Falle einer (absichtlichen oder unabsichtlichen) Bewegung oder Deplatzierung den Benutzer auf die Notwendigkeit einer Neubestimmung der Nordreferenz hinweist.

Diese Aufgaben werden durch die Verwirklichung der kennzeichnenden Merkmale der unabhängigen Ansprüche gelöst. Merkmale, die die Erfindung in alternativer oder vorteilhafter Weise weiterbilden, sind den abhängigen Patentansprüchen zu entnehmen.

Die vorliegende Erfindung behandelt einen nordreferenzierbaren Goniometer zur azimutalen Ausrichtungsbestimmung einer Anzieleinrichtung.

Der Goniometer ist aufgebaut mit einer Basis zur erdverbundenen Aufstellung und einem bezüglich der Basis um eine Stehachse azimutal verdrehbaren Drehteil, welcher mit einem Drehwinkelencoder zur Bestimmung einer Drehlage des Drehteils um die Stehachse ausgestattet ist.

Ein auf dem Drehteil fixiertes Gyroskop mit einer orthogonal zur Stehachse ausgerichteten Messrichtung, dient zur Bestimmung einer Komponente des Erdrotationsvektors, und einer Auswerteeinheit zur Bestimmung des Azimutwinkels des geographischen Nordpols anhand einer Ausrichtung der Komponente des Erdrotationsvektors. Es handelt sich dabei um eine nichtmagnetische Bestimmung der Nordpol-Richtung.

Auf dem Drehteil ist erfindungsgemäss ein Beschleunigungssensor mit einer Messrichtung orthogonal zur Stehachse und zur Messrichtung des Gyroskops fixiert.

Die Auswerteeinheit ist dabei erfindungsgemäss derart ausgebildet, dass durch die Auswerteeinheit die bestimmte Komponente des Erdrotationsvektors um eine anhand des Beschleunigungssensors ermittelte Einsinkrate des Goniometers korrigiert wird.

Die Auswerteeinheit ist dabei erfindungsgemäss weiters derart ausgebildet, dass durch die Auswerteeinheit, ein systematischer Messfehler des Gyroskops korrigiert wird, indem Messwerte der Komponente des Erdrotationsvektors in zumindest drei unterschiedlichen Drehlagen, die sich in zumindest drei vorgegebenen Drehlagenbereichen befinden, bestimmt werden.

Beim Goniometer kann die Auswerteeinheit derart ausgebildet sein, dass durch diese anhand einer Benutzerführung durch manuelles Verdrehen des Drehteils Drehlagen innerhalb der vorgegebenen Drehlagenbereichen einnehmbar sind, insbesondere wobei die Drehlagenbereiche derart vorgegeben sind, dass der systematische Messfehler des Gyroskops bestimmbar ist. Dabei wird die Benutzerführung von der Auswerteeinheit gesteuert.

Das Goniometer kann eine montierte Anzieleinrichtung aufweisen, welche gemeinsam mit dem Drehteil des Goniometers händisch drehbar ist, insbesondere wobei die Anzieleinrichtung lediglich in einer vorgegebenen Drehlage auf dem Drehteil montierbar ist.

Die Drehlagenbereiche können zumindest annähernd äquidistant um die Stehachse des Goniometers verteilt sein, insbesondere mit einem mittleren Winkelabstand von zumindest annähernd 120 Grad und einer Breite der Bereiche von +/- 10 Grad, speziell von +/- 5 Grad.

Die Auswerteeinheit kann derart ausgebildet sein, dass in zumindest drei Drehlagen anhand von Messwerten des Beschleunigungssensors eine Neigung der Stehachse gegenüber einer Lotrechten ermittelbar ist, welche bei der Bestimmung des Azimutwinkels des geographischen Nordpols einbezogen wird.

Die Auswerteeinheit kann mit einer Anzeigeeinheit, beispielsweise einem Grafik- oder Text-Display, LEDs, etc., und/oder mit einer Eingabeeinheit, beispielsweise einer Tastatur, einem Touchscreen, Schaltern, Tastern, etc. ausgestattet sein. Alternativ kann eine Bedienung des Goniometers (bzw. dessen Auswerteeinheit) auch über eine, mittels Datenkommunikation verbundene, externe Bedieneinheit erfolgen, insbesondere kann die Bedienung auch über eine auf dem Goniometer montierte Anzieleinheit erfolgen.

Die Auswerteeinheit des Goniometers kann auch derart ausgebildet sein, dass in den zumindest drei Drehlagen anhand von Messwerten des Beschleunigungssensors eine Neigung der Stehachse gegenüber einer Lotrechten ermittelbar ist, welche bei der Bestimmung des Azimutwinkels des geographischen Nordpols einbezogen wird.

Die Auswerteeinheit kann auch derart ausgebildet sein, dass eine geographische Breite eines Standortes des Goniometers ermittelbar ist, welche bei der Bestimmung des Azimutwinkels des geographischen Nordpols einbezogen wird. Die geographische Breite kann beispielsweise mittels eines GPS, mittels einer Benutzerabfrage oder mittels einer Anzielung eines bekannten Zielobjekts ermittelbar sein.

Das Goniometer kann weiters einen Neigungsmesser aufweisen, mittels welchem die Aufstellung des Goniometers mit einer annähernd lotrechten Ausrichtung der Stehachse, durchführbar ist, insbesondere mit einer Winkelabweichung von weniger als fünf Grad. Auch kann die Neigungsmessung für eine Überwachung der Aufstellung auf einen Deplatzierung der Basis durch die Auswerteeinheit genutzt werden, welche in Bezug auf eine allfällige Invalidierung der Nordreferenzierung dem Benutzer gemeldet werden kann.

Die Erfindung betrifft auch ein System zur nichtmagnetisch nordreferenzierten Anzielung bestehend aus einem erfindungsgemässen Goniometer und einem Stativ zur erdverbundenen Aufstellung des Goniometers. Das System umfasst

auch eine Anzieleinrichtung, insbesondere ein Beobachtungsgerät, beispielsweise ein Binokular, Monokular, Nachtsichtgerät, etc. Im speziellen kann die Anzieleinrichtung mit einer Elevations- und Entfernungsmesseinrichtung ausgestattet sein.

Die Messung zur Nordrichtungsbestimmung soll dabei in kurzer Zeit (vorzugsweise in einigen wenigen Minuten oder gar darunter) erfolgen, aber zugleich mit entsprechender Genauigkeit (z.B. etwa im mil-Bereich (=1/6400 Umdrehung)) der Nordreferenzierung erfolgen. Dabei kann bei der Nordreferenzierung auch in gewissen Grenzen eine erhöhte Genauigkeit gegenüber einer kürzeren Messdauer abgewogen werden.

Eine Genauigkeitsbestimmung der ermittelten Nordrichtung anhand der ermittelten Messwerte durch die Auswerteeinheit kann dabei ebenfalls durchgeführt und insbesondere dem Benutzer zur Verfügung gestellt werden.

Die Erfindung betrifft auch ein Verfahren zur Azimutwinkelbestimmung relativ zum geographischen Nordpol, insbesondere mit einem erfindungsgemässen Goniometer, mit einem Bestimmen einer Drehlage eines gegenüber einer erdverbunden aufgestellten Basis um eine Stehachse drehbaren Drehteils, mit einem Drehwinkelencoder, einem Bestimmen einer orthogonal zu Stehachse in Drehlage ausgerichteten Komponente des Erdrotationsvektors, mit einem auf dem Drehteil fixierten Gyroskop und einem Bestimmen des Azimutwinkels des geographischen Nordpols anhand einer Ausrichtung der Komponente des Erdrotationsvektors mit einer Auswerteeinheit.

Erfindungsgemäss wird dabei ein Bestimmen einer Einsinkrate des Drehteils bezüglich der Erde anhand eines orthogonal zur Ausrichtung der vom Gyroskop bestimmten Komponente des Erdrotationsvektors orientierten Beschleunigungswerts mit einem auf dem Drehteil fixierten Beschleunigungssensor, durch die Auswerteeinheit ausgeführt. Ein Kompensieren der ermittelten Einsinkrate bei der bestimmten Komponente des Erdrotationsvektors, und ein sequenzielles, manuelles Drehen des Drehteils in zumindest drei unterschiedliche Drehlagen, welche sich in zumindest drei vorgegebenen Drehlagenbereichen befinden, ist auch Teil des Verfahrens.

Dabei erfolgt das Bestimmen der Komponente des Erdrotationsvektors, Bestimmen der Einsinkrate und Kompensieren der Einsinkrate jeweiliges in den zumindest drei Drehlagen.

Dies ermöglicht ein Korrigieren eines systematischen Messfehlers, insbesondere eines Messwert-Offsets, des Gyroskops und einer Ausrichtung des Erdrotationsvektors durch Verknüpfen der Komponente des Erdrotationsvektors aus den zumindest drei Drehlagen durch die Auswerteeinheit.

Das Verfahren umfasst ein manuelles Drehen des Drehteils in eine Drehlage, welche in einem vorgegebenen Drehlagenbereich liegt, insbesondere mit einer Benutzerführung des Drehens durch die Auswerteeinheit, speziell wobei die Drehlagenbereiche derart vorgegeben werden, dass diese zumindest annähernd gleichmässig um die Stehachse verteilt sind und insbesondere eine Bereichsbreit von +/- 10 Grad, speziell von +/- 5 Grad aufweisen.

Ein Bestimmen eines Erwartungswertes einer Genauigkeit des Bestimmens des Azimutwinkels des geographischen Nordpols durch die Auswerteeinheit, insbesondere mit einem Bereitstellen des Erwartungswertes als Genauigkeitsschätzwert für einen Benutzer, kann ebenfalls Teil des Verfahrens sein.

Auch ein Erkennen einer Bewegung der Basis anhand von Messwerten eines Beschleunigungssensors durch die Auswerteeinheit und ausgeben einer Warnung bezüglich einer dadurch allfällig bedingten Invalidierung des Azimutwinkels des geographischen Nordpols, kann durchgeführt werden.

Ein Bestimmen einer Neigung der Stehachse gegenüber einer Lotrechten anhand einer Beschleunigungsmessung und Einbezug dieser Neigung in das Bestimmen des Azimutwinkels des geographischen Nordpols kann ebenfalls durch die Auswerteeinheit ausgeführt werden.

Die Auswerteeinheit kann mittels Programmcode, der auf einem maschinenlesbaren Träger gespeichert ist oder Computer-Daten-Signal, verkörpert durch eine elektromagnetische Welle, zur Durchführung des erfindungsgemässen Verfahrens gesteuert werden, insbesondere wobei der Programmcode eine Führung des Benutzers zum manuellen Verdrehen eines Drehteils in Drehlagen innerhalb von zumindest drei vorgegebenen Drehlagenbereichen ermöglicht, und vorzugsweise wenn das Programm in einer Auswerteeinheit eines nordreferenzierbaren Goniometers aufgeführt wird.

Das erfindungsgemässe Verfahren und die erfindungsgemässe Vorrichtung werden nachfolgend anhand von in den Zeichnungen schematisch dargestellten konkreten Ausführungsbeispielen rein beispielhaft näher beschrieben, wobei auch auf weitere Vorteile der Erfindung eingegangen wird. Im Einzelnen zeigen:

Fig. 1 eine erste beispielhafte Ausführungsform eines erfindungsgemässe Goniometers für eine Anzieleinrichtung;

Fig. 2 ein Achsensystem in einer beispielhaften Ausführungsform eines Anzielsystems mit einem erfindungsgemässen Goniometers;

Fig. 3 eine Anzielung mit einer Ausführungsform eines Systems mit einem erfindungsgemässen nordreferenzierbaren Goniometer;

Fig. 4 eine schematische Darstellung des Erdrotationsvektors und dessen horizontaler Komponente;

Fig. 5 eine Darstellung eines Koordinatensystems zur erfindungsgemässen Nordreferenzierung;

Fig. 6 eine bekannte Erdrotationsmessung mit zwei, in einem Winkel von 90 Grad zueinander angeordneten Gyroskopen;

Fig. 7 eine bekannte Erdrotationsmessung mit einem um einen Winkel von 90 Grad gedrehten Gyroskop;

Fig. 8 eine bekannte Offsetermittlung mit einem um 180 Grad gedrehten Gyroskop;

Fig. 9 eine erfindungsgemässe Ausführungsform einer Erdrotationsvektormessung mit einem einzelnen Gyroskop in gleichmässig über den Vollkreis aufgeteilten Drehlagen;

Fig. 10 eine Ausführungsform einer erfindungsgemässen Erdrotationsvektormessung in drei, zumindest annähernd um 120 Grad versetzten Drehlagen;

Fig. 11 eine Illustration des Effektes eines Einsinkens der Gyroskopaufstellung während der Messung;

Fig. 12 eine beispielhaftes Achssystem zur Erläuterung des Effekts einer Verkippung des Goniometers auf die Gyroskopmessung;

Fig. 13 eine Beispiel einer fehlerhaften Nordreferenzierung aufgrund eines Einsinkens oder Verkippens während der Messung;

Fig. 14 ein Beispiel einer Ausführungsform einer erfindungsgemässen Bestimmung des Einsinkens mit einem Beschleunigungssensor;

Fig. 15 eines beispielhaften Messsignals eines erfindungsgemäss eingesetzten Beschleunigungssensors;

Fig. 16 ein beispielhaftes Diagramm der erfindungsgemäss erzielbaren Genauigkeit der Nordreferenzierung;

Fig. 17 ein beispielhaftes Diagramm der erfindungsgemäss erzielbaren Genauigkeit der Nordreferenzierung und des dabei kompensierten Einsinkeffekts.

Die Darstellungen in den Figuren dienen lediglich zur Illustration und sind nicht als maßstäblich zu betrachten.

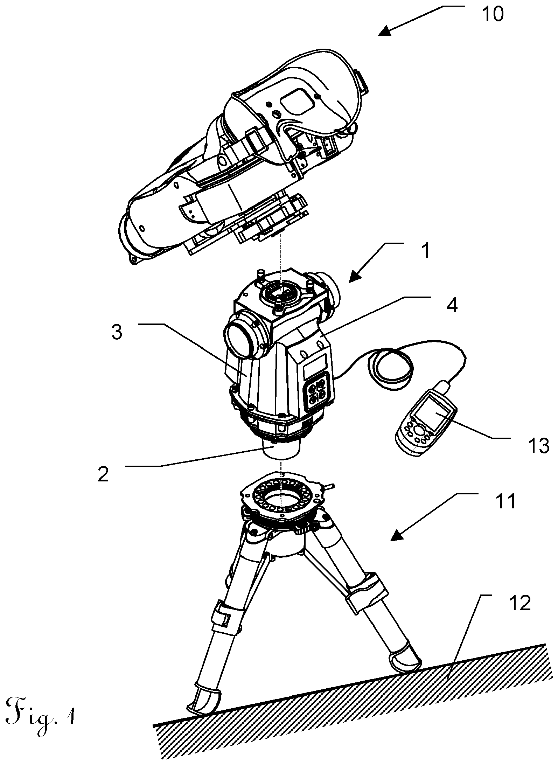

Fig. 1 zeigt eine beispielhafte Ausführungsform eines erfindungsgemäßen nordreferenzierbaren Goniometers 1 zur azimutalen Ausrichtungsbestimmung einer Anzieleinrichtung 10, mit einer Basis 2 zur erdverbundenen Aufstellung 11, welche in Form eines Stativs oder Dreibeins ,welches auf dem Erdboden 12 aufgestellt ist, dargestellt ist. Die erdverbundene Aufstellung kann auch mit alternativen Mitteln geschehen, welche eine positionsfeste Verbindung der Basis 2 des Goniometers 1 mit dem Erdkoordinatensystem sicherstellt. Beispielsweise kann die Basis 2 auch (zumindest temporär) fest auf einer Mauer oder einem Felsen befestigt werden. Ein Stativ, ähnlich wie das gezeigte, ist eine häufig angewandte Ausführungsform für einen mobilen Feldeinsatz, welche sich den jeweils vorherrschenden Umgebungsbedingungen anpassen lässt.

Der bezüglich der Basis 2 um eine Stehachse 34 azimutal verdrehbaren Drehteil 3 des Goniometers 1 ist mit einem Drehwinkelencoder zur Bestimmung einer Drehlage des Drehteils 3 um die Stehachse 34, gegenüber der Basis 2 ausgestattet. Auf dem Drehteil 2 kann eine Anzieleinrichtung 10 montiert werden, welche mit dem Drehteil richtungsfest, also in einer vorgegebenen, bekannten und reproduzierbaren Ausrichtung bezüglich der Stehachse 34 montiert werden kann. Die gezeigte Ausführungsform stellt beispielhaft ein Binokular mit integrierter Entfernungsmessfunktionalität dar, welches zusätzlich mit einer Neigungsmesseinrichtung zur Bestimmung eines Elevationswinkels ausgestattet sein kann. Andere Beispiele für Anzieleinheiten sind etwa Monokulare, Teleskope, Nachtsichtgeräte, Foto- oder Videokameras, kleine Waffensysteme, Entfernungsmesser, Laserpointer, Richtantennen, Richtmikrofone, etc.

Die in dieser Ausführungsform gezeigten Schnittstelle zwischen der Anzieleinheit 10 und dem Drehteil 3, kann neben der Richtungsbestimmung auch zur Übertragung von elektrischen Signalen genutzt werden, beispielsweise zur Anzeige und Weiterverarbeitung von Daten des Goniometers 1 in der Anzieleinheit 10 oder von Daten der Anzieleinheit 10 im Goniometer 1. Um ein für den Feldeinsatz transportables System zu erhalten, sind die Komponenten dieses Ausführungsbeispiels zerlegbar aufgebaut, sie können jedoch alternativ auch fest miteinander verbunden sein, beispielsweise kann das Goniometer 1 in die Anzieleinheit 10 oder in die Einrichtung zur Aufstellung 11 integriert sein.

In der gezeigten Ausführungsform ist der Drehteil 3 um 360 Grad rotierbar, was eine flexible Aufstellung und Ausrichtung der Anzielung in beliebige Richtungen ermöglicht. In Ausführungsformen, welche keine freie Drehung um volle 360 Grad ermöglichen, muss bei der Aufstellung des Goniometers 1 der dadurch beschränkte Anzielbereich bedacht werden.

Das Goniometer 1 hat weiters eine Auswerteeinheit 4 zur Bestimmung des Azimutwinkels des geographischen Nordpols anhand einer Ausrichtung der Komponente des Erdrotationsvektors.

Als ein Beispiel einer möglichen Erweiterungsoption zeigt die dargestellte Ausführungsform eine GPS-Einheit 13, welche eine geographische Positionsbestimmung des Aufstellungsorts des Goniometers 1 ermöglicht. Somit können etwa geographische Koordinaten von einem mit der Anzieleinheit 10 beobachteten Ziel anhand der dadurch bekannten eigenen Position, des mit dem Goniometer bestimmten Azimutwinkels und einer (z.B. opto-elektrischen) Entfernungsmessung bestimmt werden. Alternativ kann etwa auch durch ein Anpeilen von bekannten Zielen mit Hilfe des nordreferenzierten Azimutwinkels eine Bestimmung der eigenen Position durchgeführt werden. Auch ist eine Eingabe der eigenen Position z.B. anhand von Kartendaten, etwa in Form von Längen- und Breitengradinformationen in das System möglich.

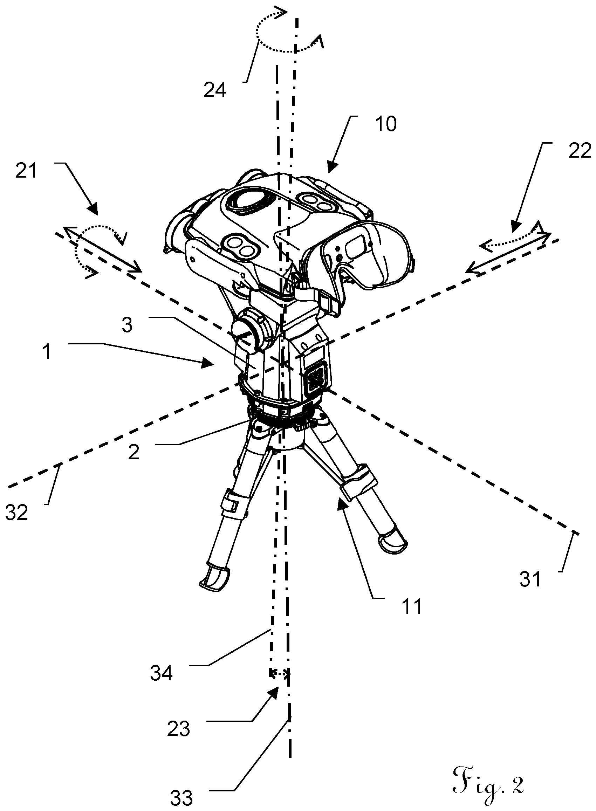

In Fig. 2 ist anhand der beispielhaften Ausführungsform aus Fig. 1 das für die im folgenden erläuterte Nordfindung relevante Koordinatensystem dargestellt. Die Stehachse 34 um welche das Goniometer 1 drehbar ist (genauso genommen ist das Drehteil 3 gegenüber der Basis 2 um die Stehachse 34 drehbar), ist dabei gegenüber einer lotrechten oder vertikalen Achse 33 um einen Winkel 23 verkippt. Zwar ist eine annähernde Aufstellung des Goniometers 1 mit der Stehachse 34 in Lotrichtung 33 (bzw. einer in horizontaler Ebene ausgerichteten Drehebene) eine übliche Vorgehensweise bei der Aufstellung eines Stativs 11 oder Goniometers 1, jedoch ist dies bei dem erfindungsgemässen Goniometer 1 nicht mit sonderlich hoher Genauigkeit erforderlich, da eine präzise Nordreferenzierung auch bei Schräglage der Drehebene sichergestellt ist. Dies ist eine deutliche Erleichterung bei einer Feldaufstellung, die oft auch unter Zeitdruck, beispielsweise in einer Gefahrenzone durchgeführt werden muss. Zudem kann durch eine Unabhängigkeit von einer genauen horizontalen Ausrichtung bei der Nordfindung auch eine potentielle Fehlerquelle ausgeschlossen werden.

Beispielsweise genügt eine Horizontierung des Goniometers nach Augenmass, also etwa im Bereich von +/- 5 Grad. Der Goniometer kann hierzu auch eine Anzeigeeinheit etwa in Form einer digitalen oder konventionellen Dosenlibelle aufweisen. Dabei können die für eine digitale Nivellierung verwendeten Neigungssensoren auch neben der Unterstützung und Überwachung einer zumindest grob nivellierten Aufstellung für weitere Funktionen genutzt werden. So kann die Neigungsmessung, beispielsweise mittels eines zwei oder dreiachsigen MEMS-Beschleunigungssensors, auch zur Überwachung auf eine allfällige Bewegung, etwa ein Transport oder ein Versetzen des Goniometers, genutzt werden, welcher eine erneute Nordreferenzierung des Goniometers erforderlich machen würde. Eine diesbezügliche Information an den Benutzer kann zur Vermeidung von Fehlmessungen beitragen.

Die Drehlage des um die Stehachse 34 drehbaren Drehteils 3 gegenüber der Basis 2 ist mit einem Drehwinkelencoder erfassbar. Die Drehrichtung wird durch den Kreisbogenpfeil 24 symbolisiert. Hierbei kann es sich um einen relativen Drehwinkelencoder handeln, da eine Referenzierung ohnehin anhand der erfindungsgemäss bestimmten geographischen Nordrichtung erfolgt, was jedoch eine Verwendung von Absolutwert-Drehwinkelencoder nicht ausschliesst. Die Winkelauflösung der bestimmten Drehlage muss dabei zumindest gleich oder grösser der gewünschten Genauigkeit der Nordreferenzierung bzw. der Azimutwinkelauflösung sein. Beispielsweise können opto-elektrische, magnetische oder kapazitive Drehwinkelmesseinrichtungen eingesetzt werden.

Wie bereits erläutert verfügt der erfindungsgemässe Goniometer 1 über ein auf dem Drehteil 3 fixiertes Gyroskop mit einer orthogonal zur Stehachse 34 ausgerichteten Messrichtung 31, zur Bestimmung einer Komponente des Erdrotationsvektors. Die Messrichtung 31 ist dabei die Richtung des Rotationsvektors 21 und senkrecht zur Rotationsebene, also in Richtung der Achse der Rotation, und gibt die Rotationsrichtung nach der so genannten Drei Finger-Regel oder Rechtehand-Regel an. Der Betrag des Rotationsvektors 21 gibt die Winkelgeschwindigkeit als Ableitung des Rotationswinkels nach der Zeit an. Der Rotationsvektors 21 ist zum einen als linearer Vektor mit einem durchgezogenen Pfeil dargestellt und zum anderen als der dazugehörige Drehsinn um die Achse 31 in Form eines punktierten Kreisbogens.

Der erfindungsgemäss ebenfalls auf dem Drehteil montierte Beschleunigungssensor ist mit seiner Messrichtung 32 orthogonal zur Messrichtung 31 des Gyroskops ausgerichtet, wobei Gyroskop und Beschleunigungssensor fix miteinander und mit dem Drehteil 3 verbunden sind. Es handelt sich hierbei um einen hochgenauen Beschleunigungssensor, welcher in der Lage ist Wertänderungen im Bereich von einigen $\mu$g ($9,81*10^{-6}$ m/s$^2$) zu erfassen. Dabei ist jedoch durchaus ein eingeschränkter Messbereich zulässig, welcher jedoch im Bereich der tolerierten Abweichung von der idealen Nivellierung der Drehebene des Drehteils liegen muss. Der gemessene Beschleunigungsvektor wird mit einem durchgezogenen Pfeil 22 symbolisiert, wobei der punktierte Pfeil eine allfällige Verkippung der Basis in diese Richtung symbolisiert, auf welche im Folgenden noch im Detail eingegangen wird.

Die beschriebenen Anordnungen der Achsen gegeneinander können produktionsbedingt durchaus gewissen Abweichungen unterliegen, da diese im Rahmen einer Kalibrierung bestimmt und bei den Berechnungen zur Nordreferenzierung entsprechend numerisch kompensiert werden können. Jedoch ist auf eine stabile Anordnung der beschriebenen Sensoren (Drehwinkelencoder, Gyroskop, Beschleunigungssensor) zu achten.

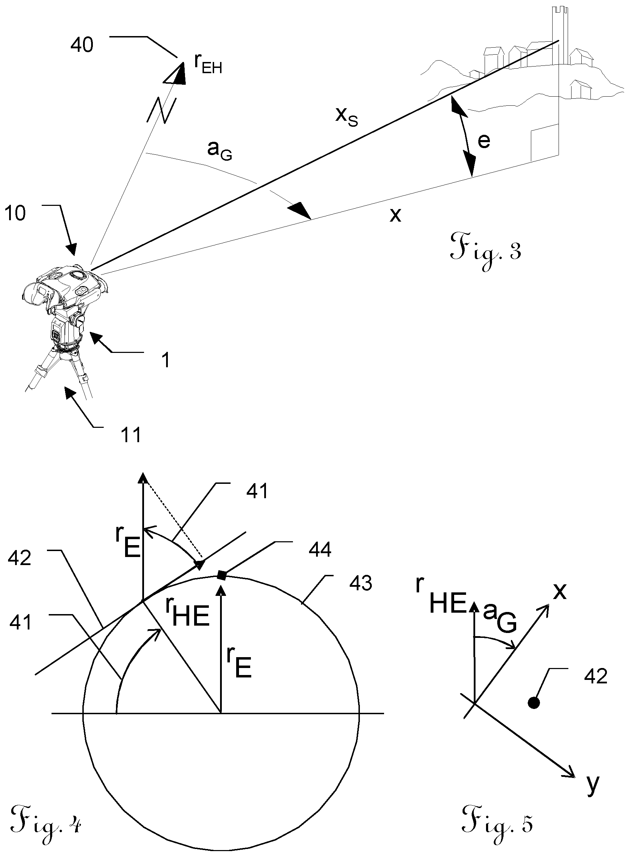

Fig. 3 zeigt einen beispielhaften Feldeinsatz des erfindungsgemässen Goniometers 1 in einem System mit Anzieleinheit 10 und Stativ 11, bei welchen ein bezüglich einer Richtung 40 zum geographischen Nordpol um einen Azimutwinkel aG und einen Elevationswinkel e ausgerichtete Anzielung xS erfolgt.

Fig. 4 erläutert an einer Skizze der Erdkugel 43 die erfindungsgemässe Bestimmung des geographischen Nordpols 44 mit dem erfindungsgemässen Goniometer 1. Der geographische Nordpol 44 definiert sich über die Richtung des Erdrotationsvektors rE, bzw. einer Projektion rHE des Erdrotationsvektors rE in die lokale Horizontalebene 42 in einem Breitengrad 41. Der in Fig. 3 und Fig. 5 dargestellte Azimutwinkel aG eines gerätebezogenen Koordinatensystems, z.B. eines Vermessungs- oder Beobachtungsgeräts, ist definiert als ein Winkel zwischen der Richtung der Geräteausrichtung (auch Blickachse, Sichtachse oder "line of sight" genannt und in Fig. 3 und Fig. 5 als x-Achse dargestellt] und der lokalen in der Horizontalebene gemessenen geographischen Nordrichtung rHE. Der horizontale Erdrotationsvektor, gemessen im Gerätekoordinatensystem (x-y), kann dabei durch die Formeln

$$rHEx = rHE*cos(aG) \text{ und } rHEy = -rHE*sin(aG) \qquad (1)$$

beschrieben werden und der Azimut kann aus den Komponenten rHEx, rHEy durch

$$aG = arctan2(rHEx, -rHEy) \qquad (2)$$

bestimmt werden, wobei gilt:

$$arctan2(r*cos(a),r*sin(a)) = a, \text{ für } r>0. \qquad (3)$$

Um nunmehr die Erdrotation zu messen, wird ein geeigneter Sensor benötigt, im speziellen ein hochgenauer Drehratensensor, zum Beispiel ein Faseroptisches Gyroskop, ein RingLaser Gyroskop, ein (hemisphärisches) Resonanz-Gyroskop, oder andere.

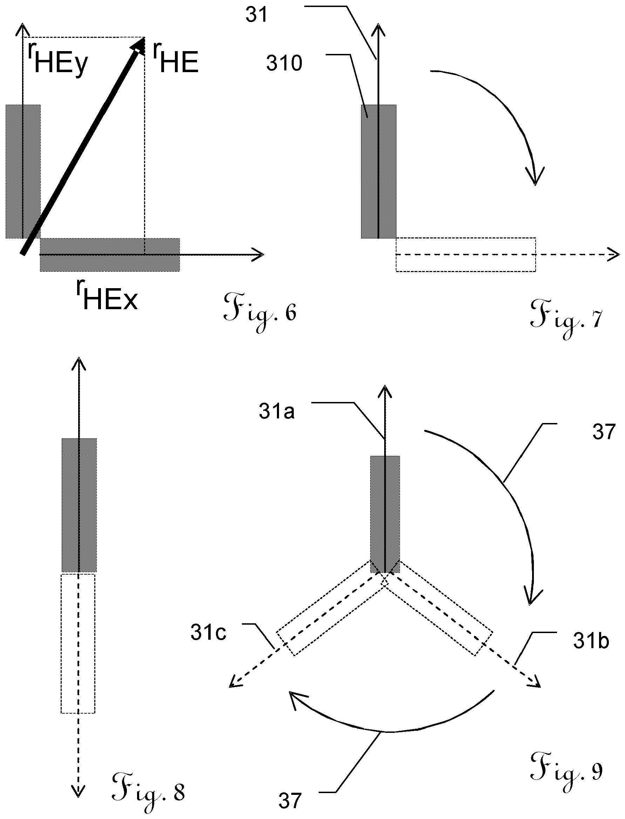

In dem in Fig. 6 dargestellten, einfachsten Fall können zwei derartige Gyroskope mit ihren Sensitivitätsachsen jeweils in x- und y-Richtung (bzw. einem zweiachsigen gyroskopischen Sensor) eingesetzt werden, um ein simultanes Messen der beiden Komponenten rHEx und rHEy der Horizontalkomponente hHE des Erdrotationsvektors rE durchzuführen.

Um Kosten, Baugrösse und Gewicht einzusparen, kann - wie in Fig. 7 dargestellt, auch nur ein einzelnes Gyroskop 310 eingesetzt werden, welches sequenziell erst in einer ersten x-Richtung und anschliessend in einer zweiten y-Richtung misst, indem es wie dargestellt um 90° gedreht wird, also beispielsweise auf einer um 90° drehbaren Plattform moniert und die Messrichtung oder Richtung seines Messvektors 31 entsprechend ausgerichtet wird.

In der erfindungsgemässen Form ist dabei das Gyroskop 310 beispielsweise auf einem Drehteil montiert, mittels welchem sich die Sensitivitätsachse des Gyroskops in der Ebene horizontalen x-y-Ebene, insbesondere in x oder y Richtung drehen lässt. Es kann sich dabei beispielsweise um eine frei rotierbare Plattform handeln, welche mittels einer Winkelmesseinrichtung, z.B. einem Winkel-Encoder den relativen Drehwinkel h (z.B. die Beschriebenen 90 Grad) zwischen einer Sensorausrichtung in x-Richtung einer xS-Richtung bezüglich des Erdbasierten Gerätekoordinatensystems bestimmen kann. Als bekanntes Ausführungsbeispiel eines solchen drehbaren Aufbaus kann dieser etwa mit der typischen Geometrie eines Vermessungs-Theodoliten verglichen werden, auf welchem ein gyroskopischer Sensor fest montiert ist, sodass seine Messachse (zumindest annähernd) orthogonal zur Stehachse 34 auf dem horizontal drehbaren Teil ist, und mit welchem die oben beschriebenen Messungen durchgeführt werden.

In diesem verallgemeinerten Fall ergibt sich die Komponente rx des Erdrotationsvektors rHE zu

$$rx(h) = rHE*cos(aG + h) \qquad (4)$$

oder unter Verwendung des Kosinus-Additionssatzes

$$rx(h) = a*cos(h) + b*sin(h) \qquad (5)$$

mit

$$a=rHE*cos(aG)$$

$$b=-rHE*sin(aG)$$

Wird die Komponente rx (h) nun in zwei Drehwinkellagen h1 and h2 gemessen, können die Koeffizienten a und b aus dem resultierenden 2 x 2 Gleichungssystem errechnet werden, und daraus dann infolge der geographische Azimut des Basisvektors xS durch

$$aG = \arctan2(a, -b) \qquad\qquad (6)$$

bestimmt werden, ähnlich wie dies bei der direkten Messung anhand der Gleichungen (1) bis (3) geschieht. Dabei liegen die Drehwinkellagen h1 und h2 in optimaler Weise möglichst 90° auseinander, da somit die grösste Sensitivität erzielbar ist.

Eine hinreichende Genauigkeit der oben angeführten Azimutbestimmung kann dabei jedoch nur erreicht werden, wenn die Gyroskope, bzw. das einzelne Gyroskop, sehr genau kalibriert sind. Gyroskope neigen speziell zu einem (insbesondere im Langzeitbereich) unstabilen Bias, also einem nicht langzeitstabilen Offset, wodurch die tatsächlichen Messwerte rx' von den tatsächlich vorherrschenden Werten rx abweichen, oder anders ausgedrückt einen Offset o aufweisen. Dieser Offset kann als (zumindest temporär) konstanter Messsignalversatz und somit während hinreichend kurzen Messzeiten als systematische Messabweichung, oder systematischer Fehleranteil o betrachtet werden, welcher während des zur Nordbestimmung benötigten Zeitraums als annähernd konstant angesehen werden kann. Formal lässt sich dies durch:

$$rx' = rx + o \qquad\qquad (7)$$

ausdrücken.

Dieser Offset würde im Falle der oben beschriebenen Messung mit einem einzelnen Gyroskop in zwei Drehlagen einen Messfehler ergeben, welcher Werte von bis zu

$$\Delta aG = \arcsin(o/rHE) \approx o/rHE \ [RAD]. \qquad\qquad (8)$$

annehmen kann.

Da die Grössenordnung und Stabilität des Offsets o ein wichtiges Merkmal bezüglich der Qualität eines gyroskopischen Sensors ist, wirkt sich dieser auch direkt auf den Sensorpreis aus. Gyroskope werden meist sogar nach der Grösse und Stabilität ihres Offsets klassifiziert und in Taktische- oder Navigations-Gyroskope eingeteilt, wobei letztere meist empfindlich teurer sind.

Es ist daher erstrebenswert eine Methode zur Nordfindung zu entwickeln, welche auch mit taktischen Gyroskopen mit hohen Offsetwerten eine hinreichend genaue Nordfindung ermöglicht, wie dies in der vorliegenden Erfindung der Fall ist. Dabei ist lediglich eine entsprechende Zeitstabilität des Offsets gefordert, was eine wesentlich geringere Anforderung darstellt, insbesondere bei entsprechender Kompensation externer Einflüsse wie etwa von Temperaturänderungen.

Um den Offset zu bestimmen kann eine um 180° versetze Messung, wie dies in Fig. 8 dargestellt ist angewendet werden, jedoch ist anhand einer derartigen Messung keine Bestimmung von beiden Komponenten rHEx und rHEy möglich.

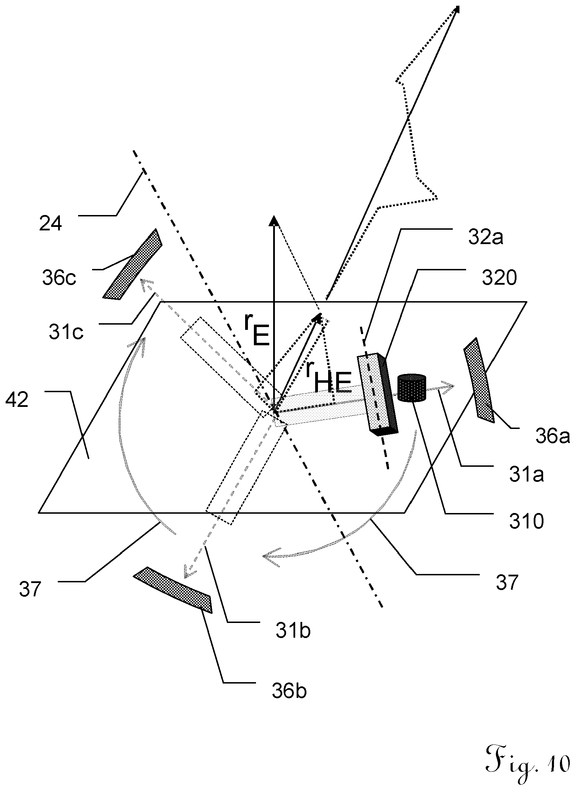

Erfindungsgemäss wird deshalb wie in Fig. 9 und Fig. 10 dargestellt und im folgenden erläutert vorgegangen. Da nunmehr drei unbekannte Parameter a, b und o gesucht sind, werden auch zumindest drei Messungen rx1 rx2, rx3 aus unterschiedlichen Drehlagen-Winkeln h1, h2, h3 benötigt. Eine zumindest annähernd gleichmässige Aufteilung der Messlagen über den Teilkreis ist dabei vorteilhaft um einen optimalen Kontrast der Messwerte (insbesondere des Offsets) zu erhalten. Auch andere Aufteilungen der drei können - mit vergleichsweise eingeschränkter Genauigkeit - zum gewünschten Ergebnis führen, eine hochpräzise Aufteilung ist daher nicht erforderlich, jedoch müssen die Drehlagen zueinander entsprechend genau bekannt sein, was bei einem winkelmessenden Goniometer 1 jedoch ohnehin als gegeben angenommen werden kann. Beispielsweise kann also ein gleichmässig aufgeteilter Winkelabstand von h1, zu h2, zu h3 von jeweils (zumindest annähernd) 120° angewandt werden, wie dies durch die Messachsen 31a, 31b und 31c des Gyroskops 310 dargestellt wird. Der exakte absolute Wert der Drehlagen, in welcher die gyroskopischen Messungen durchgeführt werden, spielt dabei wie gesagt eine untergeordnete Rolle, da die Drehlage ja als Messwert in den Berechnungen ohnehin Berücksichtigung findet, jedoch sollte die Drehlage während einer Messung stabil bleiben. Die Drehung 37 kann daher händisch erfolgen. Die Forderung nach einer diesbezüglich hinreichenden Genauigkeit der Winkelmessung ergibt sich für den Fachmann in offensichtlicher Weise.

Die beschriebenen drei Messungen führen zu einem Gleichungssystem mit drei Gleichungen und drei unbekannten, welches wie folgt dargestellt werden kann.

$$\begin{pmatrix} r_{x1} \\ r_{x2} \\ r_{x3} \end{pmatrix} = M \begin{pmatrix} a \\ b \\ o \end{pmatrix} \quad , \quad M = \begin{pmatrix} \cos(h_1) & \sin(h_1) & 1 \\ \cos(h_2) & \sin(h_2) & 1 \\ \cos(h_3) & \sin(h_3) & 1 \end{pmatrix} \qquad (9)$$

Dieses Gleichungssystem kann beispielsweise mit der bekannten mathematischen Methode der Matrix-Inversion (oder anderen Prinzipien) gelöst werden:

$$\begin{pmatrix} a \\ b \\ o \end{pmatrix} = M^{-1} \begin{pmatrix} r_{x1} \\ r_{x2} \\ r_{x3} \end{pmatrix} \qquad (10)$$

Wie bereits zuvor erläutert, ist daraus der geographischen Azimut bestimmbar als

$$aG = arctan2(a,-b). \qquad (11)$$

Derselbe Satz von Parametern kann auch bei Messungen in mehr als drei unterschiedlichen Drehlagen (oder mehrfachen Messungen in denselben Drehlagen) angewandt werden. In derartigen Fällen sind dem Fachmann spezielle mathematische Methoden bekannt, welche sich hierbei zur Berechnung besonders eigen, beispielsweise eine Verwendung der Least-Square-Methode, wie etwa anhand der Formel:

$$\begin{pmatrix} a \\ b \\ o \end{pmatrix} = (M^T M)^{-1} M^T \begin{pmatrix} r_{x1} \\ \vdots \\ r_{xN} \end{pmatrix} \quad , \quad M = \begin{pmatrix} \cos(h_1) & \sin(h_1) & 1 \\ \vdots & \vdots & \vdots \\ \cos(h_N) & \sin(h_N) & 1 \end{pmatrix} \qquad (10a)$$

Es gilt bei einer Aggregation einer Vielzahl von Messungen jedoch zu bedenken, dass - bedingt durch die Langzeitdrift des Gyroskop-Offset - es vorteilhaft sein kann nur Messungen innerhalb eines hinreichend kurzen Zeitraums mit einer konstanten Offset-Modelierung zusammenzufassen, also die Nordbestimmung eher kurz zu halten und nur die minimal nötigen drei Lagen zu verwenden. Alternativ kann der Benutzer auch anwendungsspezifisch zwischen einer längeren und genaueren und einer schnelleren aber ungenaueren Nordbestimmung wählen.

Fig. 10 veranschaulicht nochmals die beschriebene Messung mit einem einzelnen Gyroskop 310 in drei Drehlagen 31a, 31b und 31c in der Ebene 42 welche die Horizontalebene am Messstandort symbolisiert und orthogonal zur Dreh- oder Stehachse 34 liegt. Erfindungsgemäss muss diese Horizontalebene jedoch nicht hochgenau mit der Drehebene zusammenfallen, wie dies weiter unten nochmals im Detail erläutert wird. Der in dieser Ebene liegende Anteil rHE des Erdrotationsvektors rE wird in den drei symbolisierten, (zumindest annähernd) gleichmässig verteilten, in diesem Ausführungsbeispiel insbesondere 120° auseinander liegenden Drehlagen 31a, 31b und 31c des Gyroskops 31a, in Form von drei Komponenten des Erdrotationsvektors bestimmt. Die Drehlagen 31a, 31b und 31c müssen dabei wie bereits erläutert nicht exakte Winkelpositionen einnehmen, sollten aber in den vorgegebenen Drehlagenbereichen 36a, 36b und 36c liegen. Das Einnehmen einer Drehlagen innerhalb dieser Drehlagenbereiche 36a, 36b und 36c mittels händischer Drehung 37 kann durch eine Benutzerführung der Auswerteeinheit unterstütz werden. Beispielsweise kann dem Benutzer durch eine Anzeige das Erreichen des vorgegebenen Drehlagenbereichs bzw. die dazu notwendige Drehung 27 indiziert werden. Durch die drei Messlagen ist neben den beiden x- und y-Komponenten rHEx und rHEy des in der Ebene 42 liegenden Anteil des Erdrotationsvektors rHE auch ein systematischer Messfehler des Gyroskops (welcher vielfach von einem langzeitvariablen Messwert-Offset dominiert wird) bestimmbar und somit auch kompensierbar. Somit wird eine genaue Nordreferenzierung des Azimutwinkels mit dem erfindungsgemässen Goniometer erzielt.

Neben dem Offset der Gyroskope rührt bei praktischen Messungen, insbesondere beim Feldeinsatz von tragbaren Geräten - was wohl ein häufiger Anwendungsfall des erfindungsgemässen Goniometers ist - eine weitere Fehlerquelle von einer unzureichend stabilen Verbindung des Gerätekoordinatensystems mit den Erdkoordinaten her.

Da die hier behandelte Nordfindung auf einer Messung der des Erdrotationsvektors (bzw. dessen Komponenten) beruht, ist wie bereits erläutert eine feste Stationierung des Geräts bezüglich des Erdkoordinatensystems sicherzustellen. Das verwendete Gyroskop 310 ist nicht in der Lage die Drehung der Erde (relativ zum stellaren Bezugssystem) von irgendwelchen anderen Drehbewegungen zu unterscheiden, insbesondere nicht von Drehbewegungen des Gyroskops bezüglich der Erde. Im speziellen wird jede Drehbewegung des Geräts relativ zur Erde vom Gyroskop erfasst, somit auch beispielsweise ein Einsinken des Gerätes mit dem Gyroskop in den Untergrund auf dem es aufgestellt ist.

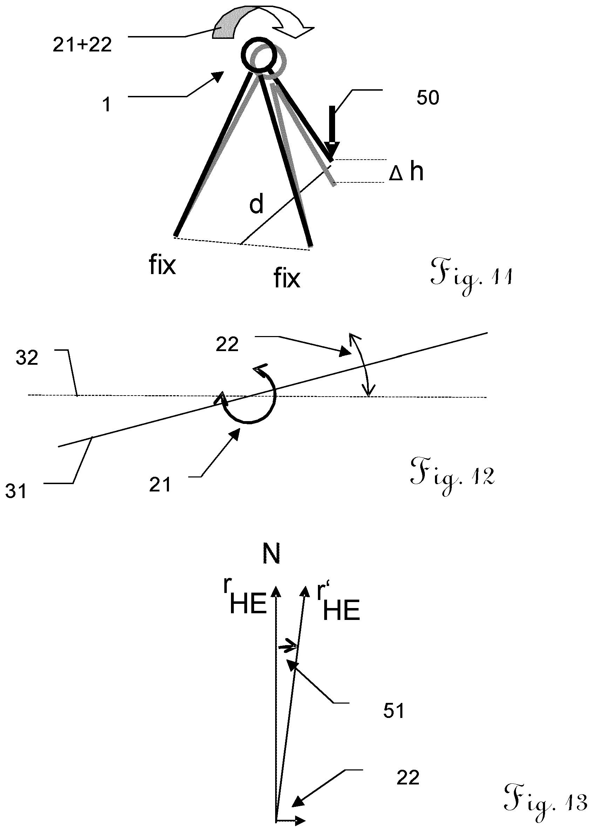

Ein in Fig. 11 dargestelltes Einsinken 50 würde für das Gyroskop eine überlagerte Drehung 21+22 darstellen und das Messergebnis verfälschen. Da die zu messende Drehrate der Erde sehr gering ist (z.B. bei horizontaler Ausrichtung im 45. Breitengrad etwa 0.17 Grad pro Minute), würde schon ein sehr geringes Einsinken 50 oder eine Erschütterung während der Messung das Messergebnis verfälschen.

Im praktischen Feldeinsatz sind derartige aufstellungsbedingte Störeinflüsse niemals gänzlich zu vermeiden und bedürfen daher entsprechender Behandlung. Beispielsweise wird bei einem Beobachtungsgerät, einem Theodoliten oder einer sonstigen Mess- oder Anzieleinheit, welche beispielsweise auf einem Stativ oder Dreibein auf typischen Untergründen 12 wie Erde, Gras, Sand, Kies, etc. aufgestellt ist, wohl meist mit einem derartigen Einsinken 50 zu rechen sein. Auch das Stativ 11 selbst kann eine Quelle solcher geringfügiger Bewegungen sein, beispielsweise aufgrund von Verformungen, beispielsweise durch (ungleichmässige) Erwärmung, wie etwa durch Sonneneinstrahlung, durch langsames Fliessen von Schmiermitteln in den Lagern, etc.

Derartige Effekte wirken sich insbesondere störend aus, da - wie erwähnt - die Erdrotationsrate rE sehr geringe Werte von etwa 360°/24h = 15°/h aufweist. Die erfindungsgemäss gemessene, horizontale Komponenten rHE hängt zudem von der geographischen Position ab und ergibt sich zu:

$$\mathrm{rHE} = \mathrm{rE}*\cos(\lambda),$$

mit $\lambda$ als dem geographischen Breitengrad.

In einem mittleren Breitengrad beträgt daher die vom Gyroskop zu messende Drehrate etwa 10°/h.

Zufolge der Gleichung (8) würde dabei ein Messfehler 22 der gyroskopischen Messung von 0.01°/h in einem maximalen Nordweisungsfehler 51 von 0.01°/h/10°/h = 1/1000 = 1 miliRAD führen, wie dies Fig. 13 veranschaulicht.

Dies ist gleichbedeutend mit einer Einsinkrate des Gerätes relativ zur Erde von nur

$$0.01°/\mathrm{h}\ /180\ *\ \mathrm{pi}\ *\ 1E6\ *\ 60\ =\ 3\ \mathrm{mikroRAD/Minute},$$

oder anders ausgedrückt eine Sinkbewegung 50 $\Delta$h von lediglich 3 Mikrometern bei einer Basisbreite d von 1 Meter (siehe Fig. 11). Derart geringe Bewegungen können im praktischen Feldeinsatz in der Regel nicht vermieden werden.

Sogar mit dem zuvor beschriebenen, erfindungsgemässen Ausgleichs des Gyroskop-Offsets anhand der Messung in drei oder mehr Winkellagen, wird die Messung daher nicht nur die tatsächliche Erdrotationsrate bestimmen, sondern eine fehlerhafte Drehrate, welche als

$$\mathrm{rGx} = \mathrm{rEx} + \mathrm{rs} \hspace{4cm} (12)$$

dargestellt werden kann, wobei rs für die Drehrate durch die Einsinkbewegung bezüglich der Erdkoordinaten steht.

Eine rein gyroskopische Messung ist daher zumeist nicht ausreichend eine zuverlässige Nordbestimmung in einem hinreichend genau bekannten oder garantierten Genauigkeitsintervall sicherzustellen.

Entsprechend eines Aspekts der Erfindung wird deshalb zusätzlich zum Gyroskop eine Messung der Einsinkrate und Kompensation der daraus resultierenden Drehbewegung in der gyroskopischen Messung durchgeführt. Die Einsinkrate wird dabei durch eine entsprechend genaue Beschleunigungsmessung rechtwinklig zur gyroskopischen Messrichtung erzielt (Siehe auch Fig. 10). Beispielsweise kann hierzu ein genauer so genannter Mikro-G-Sensor 320, etwa in Form eines empfindlichen Beschleunigungssensors Verwendung finden, dessen Sensitivitätsachse 32a in einer orthogonal zur Richtung des gemessenen Drehvektors 31a liegt.

Der dabei bestimmte Gravitationsvektor kann einerseits zu einer Bestimmung und mathematischen Kompensation einer allfällig nicht gänzlich horizontalen Aufstellung des Geräts genutzt werden, als auch zur Bestimmung eines allfälligen Einsinkens als eine zeitliche Änderung der Neigung während der Messung.

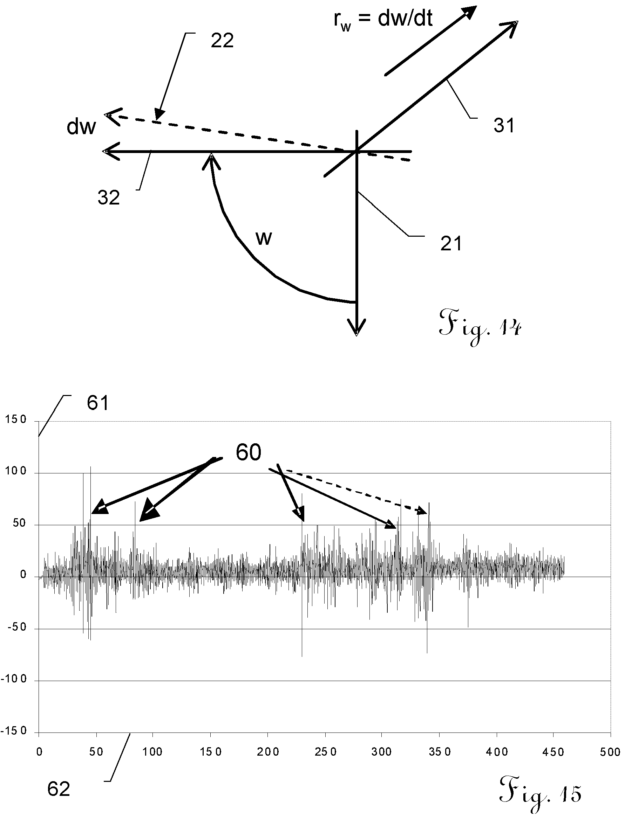

In Fig. 14 ist das Einsinken und dessen Bestimmung mittels eines Beschleunigungssensors graphisch dargestellt. Anhand des mittels des Beschleunigungssensors während der Messzeit des Gyroskops bestimmen zeitlichen Verlaufs des Neigungswinkels w(t), kann beispielsweise eine mittlere Neigungsrate von rw = rs bestimmt werden, welche bei der in dieser Richtung ausgeführten Gyroskopmessung ausgeglichen werden kann. In einfachster Form, beispielsweise durch Subtraktion der Neigungsraten der Geräteaufstellung von der gyroskopischen Drehrate, etwa anhand der Formel:

$$rx' \; = \; rx \; - \; rw \; = \; rEx \; + \; rs \; - \; rs \; = \; rEx, \qquad (13)$$

Die Neigungsrate kann aus einem Zeitverlauf von Messwerten des Beschleunigungssensors bestimmt werden, wie dies einem Fachmann geläufig ist, beispielsweise mittels einer Trend-Berechnung in der Form von:

$$wj \; = \; rw \star tj \; + \; w0 \qquad (14)$$

wobei

$$tj = \; j \star \Delta t, \qquad (15)$$

mit den Messintervallen bzw. der Messrate von $\Delta t$.

Fig. 15 zeigt einen beispielhaften Zeitverlauf eines Messsignals eines Beschleunigungssensors 61 skaliert in Mikro-Radiant der Verkippung der Ausstellung und mit der Zeitachse 62 skaliert in Sekunden. Es sind deutlich Störungen 60 zu sehen, beispielsweise verursacht durch Personen oder eine unsichere Aufstellung. Durch deren erfindungsgemässe, messtechnische Erfassung mittels des Beschleunigungssensors sind diese bei der Drehratenbestimmung des Gyroskops entsprechend kompensierbar.

Details zu den hier erwähnten mathematischen Methoden oder Alternativen bzw. Ergänzungen zu diesen, sowie deren Implementierung in Auswerteeinheiten wie digitalen Recheneinheiten, Mikroprozessoren, DSPs, FPGAs, etc. welche zur mathematischen Auswertung und/oder zur Steuerung des Messablaufes Verwendung finden, sind auch in entsprechender Fachliteratur bezüglich der Evaluation von experimentellen Daten nachzulesen, beispielsweise W.H.Press et.al., Numerical Recipes, Third Edition, Cambridge University Press 2007, insbesondere Kapitel 15. Im Rahmen der Signalauswertung kann auch eine einfache oder mehrfache Integration der Messsignale zur Störungsunterdrückung herangezogen werden. Es ist dem Fachmann weiterhin geläufig, dass entsprechende analoge und/oder digitale Filterungen der Messsignale, Beachtung von Quantisierungseffekten, Unterdrückung von Aliasing, zu weiteren Verbesserungen der Messsignale und der erzielbaren Genauigkeit führen können. Beispielsweise können dadurch Störungen durch Umgebungsvibrationen ausgeblendet oder reduziert werden, wie diese etwa entstehen können wenn sich Personen, Fahrzeuge, Wind, Motoren, etc. in der Umgebung befinden.

Die somit, insbesondere bezüglich des Einsinkens, korrigierten Werte rxj' können dann in Gleichung (10) oder (10a) statt der unkorrigierten Werte rxj Verwendung finden.

$$\begin{pmatrix} a \\ b \\ o \end{pmatrix} = M^{-1} \begin{pmatrix} r_{x1} - r_{w1} \\ r_{x2} - r_{w2} \\ r_{x3} - r_{w3} \end{pmatrix} \qquad (16)$$

Auch kann der Beschleunigungssensor die Positionierung des Gerätes überwachen und im Falle einer durch diese detektierten Bewegung des Gerätes (Umpositionierung, Versatz, Anstossen, starkes Einsinken, Verlassen eines Nivellierbereichs, etc.) den Benutzer automatisch zu einer erneuten Nordung auffordern.

Anhand der bestimmten Daten kann auch ein Erwartungswert der erreichten Genauigkeit der Nordreferenzierung berechnet und dem Benutzer angezeigt werden, vorzugsweise als Azimutwinkelwert. Dieser lässt sich aus der erfindungsgemässen Mehrlagenmessung bestimmen.

Die Horizontalebene muss nicht hochgenau mit der Drehebene zusammenfallen (was einer Abweichung der Lotrechten von der - die Drehung definierenden Stehachse gleichkommt). Es ist hinreichend die Neigung der Stehachse gegenüber der Lotrechten zu kennen, was eine jeweilige Beschleunigungsmessung in den zuvor beschriebenen drei Drehlagen gegeben ist. Diese kann bei den Berechnungen zur Nordreferenzierung entsprechend berücksichtigt werden.

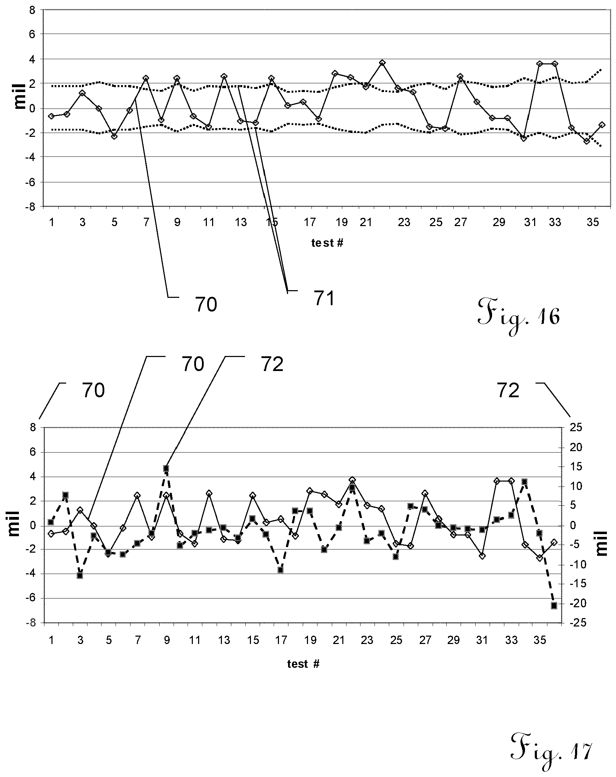

Fig. 16 zeigt beispielhaft einen Verlauf der mit einem Tactical-Grade Gyroskop und einem Mikro-G-Sensor in einer Zeit von 2 Minuten erzielbaren Genauigkeit

der Nordreferenzierung, inklusive allfälliger mechanischer Fehler. Dabei ist der Azimut-Fehler 70 in mil (1/6400 Umdrehung) über mehrere Messungen gezeigt- sowie eine RMS (root-mean-square) -Schätzung 71 des Fehlers.

Fig. 17 zeigt den Fehler der Nordreferenzierung 70 im Vergleich zu der jeweils vorgenommenen Einsink-Korrektur 72 über mehrere Messungen. Dies zeigt eindrücklich die praktische Bedeutung der erfindungsgemässen Einsinkraten-Korrektur. Auch wenn bei den gezeigten Messungen der Goniometer augenscheinlich fest aufgestellt war, so übersteigt, insbesondere bei den letzten Messungen, dennoch der dabei kompensierte, durch das Einsinken verursachte Fehleranteil bei der Nordreferenzierung den erfindungsgemäss erzielbaren RMS-Fehler der Nordweisung um ein Vielfaches.

**Patentansprüche**

1. Nordreferenzierbarer Goniometer (1) zur azimutalen Ausrichtungsbestimmung einer Anzieleinrichtung (10), mit

- einer Basis (2) zur erdverbundenen Aufstellung,
- einem bezüglich der Basis (2) um eine Stehachse (34) azimutal verdrehbaren Drehteil (3), welches derart ausgebildet ist, dass an diesem die Anzieleinrichtung (10) derart montierbar ist, dass diese gemeinsam mit dem Drehteil (3) drehbar ist,
- einem Drehwinkelencoder zur Bestimmung einer Drehlage des Drehteils (3) um die Stehachse (34),
- einem auf dem Drehteil (3) fixierten Gyroskop (310) mit einer orthogonal zur Stehachse (34) ausgerichteten Messrichtung (21,31), zur Bestimmung einer Komponente (rHE) des Erdrotationsvektors, und
- einer Auswerteeinheit (4) zur Bestimmung des Azimutwinkels (aG) des geographischen Nordpols (44) anhand einer Ausrichtung der Komponente (rHE) des Erdrotationsvektors,

   **dadurch gekennzeichnet, dass**
   auf dem Drehteil (3) ein Beschleunigungssensor (320) mit einer Messrichtung (22,32) orthogonal zur Messrichtung (21) des Gyroskops fixiert ist und
   die Auswerteeinheit (4) derart ausgebildet ist, dass durch die Auswerteeinheit (4)

   - die bestimmte Komponente (rHE) des Erdrotationsvektors um eine anhand des Beschleunigungssensors (320) ermittelte Einsinkrate des Goniometers (1) korrigiert wird, und
   - ein systematischer Messfehler des Gyroskops (320) korrigiert wird,

   indem Messwerte der Komponente (rHE) des Erdrotationsvektors in zumindest drei vom Drehwinkelencoder jeweils als Drehlagen-Messwert bestimmten, unterschiedlichen Drehlagen, die sich in zumindest drei vorgegebenen Drehlagenbereichen (36a,36b,36c) befinden, bestimmt werden, wobei eine Berücksichtigung der, der Komponente (rHE) des Erdrotationsvektors zugehörigen Messwerte der Drehlagen durch die Auswerteeinheit (4) erfolgt.

2. Goniometer (1) nach Anspruch 1,
   **dadurch gekennzeichnet, dass**
   die Auswerteeinheit (4) derart ausgebildet ist, dass durch diese mittels einer Anzeige einem Benutzer anhand einer Benutzerführung das Erreichen der vorgegebenen
   Drehlagenbereiche beziehungsweise die dazu notwendige Drehung indiziert wird, sodass durch manuelles Verdrehen des Drehteils (3) Drehlagen innerhalb der vorgegebenen Drehlagenbereichen (36a,36b,36c) einnehmbar sind, insbesondere wobei die Drehlagenbereiche (36a,36b,36c) derart vorgegeben sind, dass der systematische Messfehler als ein Messwert-Offset des Gyroskops (310) bestimmbar ist.

3. Goniometer (1) nach einem der vorangehenden Ansprüche,
   **dadurch gekennzeichnet, dass**
   das Drehteil (3) des Goniometers (1) händisch drehbar ist, insbesondere wobei die Anzieleinrichtung (10) lediglich in einer vorgegebenen Drehlage auf dem Drehteil (3) montierbar ist, speziell wobei mit dem Drehwinkelencoder des Goniometers (1) eine Drehlage einer montierten Anzieleinrichtung (10) bestimmbar ist.

4. Goniometer (1) nach einem der vorangehenden Ansprüche,
**dadurch gekennzeichnet, dass**
die Drehlagenbereiche (36a,36b,36c) zumindest annähernd äquidistant um die Stehachse (34) des Goniometers verteilt sind, insbesondere mit einem mittleren Winkelabstand von zumindest annähernd 120 Grad und einer Bereichsbreite von +/- 10 Grad, speziell von +/- 5 Grad.

5. Goniometer (1) nach einem der vorangehenden Ansprüche,
**dadurch gekennzeichnet, dass**
die Auswerteeinheit (4) derart ausgebildet ist, dass in den zumindest drei Drehlagen anhand von Messwerten des Beschleunigungssensors eine Neigung der Stehachse (34) gegenüber einer Lotrechten (33) ermittelbar ist, welche bei der Bestimmung des Azimutwinkels (aG) des geographischen Nordpols einbezogen wird.

6. Goniometer (1) nach einem der vorangehenden Ansprüche,
**dadurch gekennzeichnet, dass**
das Goniometer (1) in die Anzieleinrichtung (10) oder in ein Stativ (11) integriert ist, wobei das Drehteil (3) mit der Anzieleinrichtung (10) oder die Basis (2) mit dem Stativ (11) fest verbunden ist.

7. Goniometer (1) nach einem der vorangehenden Ansprüche,
**dadurch gekennzeichnet, dass**
der Goniometer (1) mit einer Datenübertragungsschnittstelle ausgestattet ist, wobei die Auswerteeinheit (4) derart ausgestaltet ist,
dass sie mittels der Datenübertragungsschnittstelle die azimutale Ausrichtung mit externen Messwerten verknüpft, insbesondere wobei die externen Messwerte von einer montierten Anzieleinrichtung (10) stammen.

8. Goniometer (1) nach einem der vorangehenden Ansprüche,
**gekennzeichnet durch**
einen zusätzlichen Neigungsmesser für

- die Aufstellung mit einer annähernd lotrechten Ausrichtung der Stehachse (34), insbesondere mit einer Winkelabweichung von weniger als fünf Grad, sowie für
- eine Überwachung der Aufstellung des Goniometers (1) auf eine Bewegung oder Deplatzierung der Basis (2) und eine **dadurch** bedingte Invalidierung der Referenzierung zum geographischen Nordpol (44).

9. System zur nichtmagnetisch nordreferenzierten Anzielung bestehend aus

- einem Goniometer (1) nach einem der Ansprüche 1 bis 8,
- einer Anzieleinrichtung (10), insbesondere eines Beobachtungsgeräts, im speziellen mit einer Elevations- und Entfernungsmesseinrichtung, und
- einem Stativ (11) zur erdverbundenen Aufstellung des Goniometers (1).

10. Verfahren zur Azimutwinkelbestimmung relativ zum geographischen Nordpol, insbesondere mit einem Goniometer (1) nach einem der Ansprüche 1 bis 8 wobei das Verfahren die folgenden Verfahrensschritte umfasst:

• Bestimmen einer Drehlage eines gegenüber einer erdverbunden aufgestellten Basis (2) um eine Stehachse (34) drehbaren Drehteils (3) an welchem eine Anzieleinrichtung (10) montierbar ist, sodass diese gemeinsam mit dem Drehteil (3) drehbar ist, mit einem Drehwinkelencoder,
• Bestimmen einer orthogonal zu Stehachse (34) in einer Drehlage ausgerichteten Komponente (rHE) des Erdrotationsvektors, mit einem auf dem Drehteil (3) fixierten Gyroskop (310),
• Bestimmen des Azimutwinkels (aG) des geographischen Nordpols (44) anhand einer Ausrichtung der Komponente (rHE) des Erdrotationsvektors mit einer Auswerteeinheit (4),

**gekennzeichnet durch**
die folgenden weiteren Verfahrensschritte:

• Bestimmen einer Einsinkrate des Drehteils (3) bezüglich der Erde (12) anhand eines orthogonal zur Ausrichtung der vom Gyroskop bestimmten Komponente (rHE) des Erdrotationsvektors orientierten Beschleunigungswerts mit einem auf dem Drehteil (3) fixierten Beschleunigungssensor (320), **durch** die Auswerteeinheit (4)
• Korrigieren der bestimmten Komponente (rHE) des Erdrotationsvektors um die ermittelte Einsinkrate,
• sequenzielles, manuelles Drehen des Drehteils (3) in zumindest drei unterschiedliche Drehlagen, welche sich in zumindest drei vorgegebenen Drehlagenbereichen (36a,36b,36c) befinden, wobei das Bestimmen der Komponente (rHE) des Erdrotationsvektors,
Bestimmen der Einsinkrate und Kompensieren der Einsinkrate jeweils in den zumindest drei
Drehlagen erfolgt, wobei die Drehlagen jeweils als
Messwert mit dem Drehwinkelencoder bestimmt werden,
• Korrigieren eines systematischen Messfehlers, insbesondere eines Messwert-Offsets, des Gyroskops (310) und einer Ausrichtung des Erdrotationsvektors **durch** Verknüpfen der Komponente (rHE) des Erdrotationsvektors aus den zumindest drei Drehlagen **durch** die Auswerteeinheit,

wobei eine Berücksichtigung der, der Komponente (rHE) des Erdrotationsvektors zugehörigen, mit dem Drehwinkelencoder bestimmten Messwerte der Drehlagen **durch** die Auswerteeinheit (4) erfolgt.

**11.** Verfahren nach Anspruch 10, **gekennzeichnet durch**
eine Benutzerführung des manuellen Drehens **durch** die Auswerteeinheit mittels einer Anzeige, speziell wobei durch die Benutzerführung die
Drehlagenbereiche (36a,36b,36c) derart vorgegeben werden, dass diese zumindest annähernd gleichmässig um die Stehachse (34) verteilt sind und insbesondere eine Bereichsbreite von +/- 10 Grad, speziell von +/- 5 Grad aufweisen.

**12.** Verfahren nach einem der Ansprüche 10 oder 11,
**gekennzeichnet durch**
ein Bestimmen eines Erwartungswertes einer Genauigkeit des Bestimmen des Azimutwinkels (aG) des geographischen Nordpols (44) **durch** die Auswerteeinheit (4), insbesondere mit einem Bereitstellen des Erwartungswertes als Genauigkeitsschätzwert für einen Benutzer.

**13.** Verfahren nach einem der Ansprüche 10 bis 12,
**gekennzeichnet durch**
ein Erkennen einer Bewegung oder Deplatzierung der Basis anhand von Messwerten eines zusätzlichen Neigungsmessers **durch** die Auswerteeinheit und Ausgeben einer Warnung bezüglich einer **dadurch** allfällig bedingten Invalidierung der Referenzierung des Azimutwinkels (aG) des geographischen Nordpols (44).

**14.** Methode nach einem der Ansprüche 10 bis 13,
**gekennzeichnet durch**
ein Bestimmen einer Neigung der Stehachse (34) gegenüber einer Lotrechten anhand einer Beschleunigungsmessung und Einbezug dieser Neigung in das Bestimmen des Azimutwinkels (aG) des geographischen Nordpols (44) durch die Auswerteeinheit.

**15.** Ein Computerprogrammprodukt mit Programmcode, der auf einem maschinenlesbaren Träger gespeichert ist oder Computer-Daten-Signal, verkörpert durch eine elektromagnetische Welle, zur Durchführung des Verfahrens nach einem der Ansprüche 10 bis 14, insbesondere wobei der Programmcode eine Führung des Benutzers zum manuellen Verdrehen eines Drehteils (3) in Drehlagen innerhalb von zumindest drei vorgegebenen Drehlagenbereichen (36a, 36b, 36c) ermöglicht, wenn das Programm in einer Auswerteeinheit eines nordreferenzierbaren Goniometers (1) nach einem der Ansprüche 1 bis 9 aufgeführt wird.

**Claims**

**1.** North-referenceable goniometer (1) for azimuthal orientation determination of a sighting device (10), having

- a base (2) for the ground-based support,
- a rotary part (3) which can be rotated azimuthally relative to the base (2) about an upright axis (34), which rotary part is formed in such a way that the sighting device (10) is mountable thereto such that it is rotatable together with the rotary part (3),
- a rotation angle encoder for determining a rotational position of the rotary part (3) about the upright axis (34),
- a gyroscope (310) fixed on the rotary part (3) and having a measurement direction (21, 31) oriented orthogonally to the upright axis (34) for determining a component (rHE) of the Earth rotation vector, and
- an evaluation unit (4) for determining the azimuthal angle (aG) of the geographical north pole (44) with the aid of an orientation of the component (rHE) of the Earth rotation vector,

**characterized in that**
an acceleration sensor (320) having a measurement direction (22, 23) orthogonally to the measurement direction (21) of the gyroscope is fixed on the rotary part (3) and the evaluation unit (4) is formed in such a way that, using the evaluation unit (4),

- the determined component (rHE) of the Earth rotation vector is corrected by a sink rate of the goniometer (1), determined with the aid of the acceleration sensor (320), and
- a systematic measurement error of the gyroscope (320) is corrected

by determining measurement values of the component (rHE) of the Earth rotation vector in at least three different rotational positions, determined by the rotation angle encoder in each case as rotational position measurement value, which lie in at least three predetermined rotational position ranges (36a, 36b, 36c), wherein the measurement values of the rotational positions which are associated with the component (rHE) of the Earth rotation vector are taken into consideration by the evaluation unit (4).

2. Goniometer (1) according to Claim 1,
**characterized in that**
the evaluation unit (4) is formed in such a way that, using it, reaching the predetermined rotational position ranges or the rotation necessary therefor is indicated to a user using a display by way of a user guidance such that rotational positions within the predetermined rotational position ranges (36a, 36b, 36c) can be occupied by manual rotation of the rotary part (3), the rotational position ranges (36a, 36b, 36c) being in particular predetermined in such a way that the systematic measurement error as a measurement value offset of the gyroscope (310) can be determined.

3. Goniometer (1) according to any one of the preceding claims,
**characterized in that**
the rotary part (3) of the goniometer (1) can be rotated by hand, the sighting device (10) being in particular mountable on the rotary part (3) only in a predetermined rotational position, specifically wherein a rotational position of a mounted sighting device (10) can be determined with the rotation angle encoder of the goniometer (1).

4. Goniometer (1) according to any one of the preceding claims,
**characterized in that**
the rotational position ranges (36a, 36b, 36c) are distributed at least approximately equidistantly around the upright axis (34) of the goniometer, in particular with an average angular spacing of at least approximately 120 degrees and a range width of +/- 10 degrees, especially +/- 5 degrees.

5. Goniometer (1) according to any one of the preceding claims,
**characterized in that**
the evaluation unit (4) is formed in such a way that in the at least three rotational positions, with the aid of measurement values of the acceleration sensor, it is possible to determine an inclination of the upright axis (34) relative to a vertical (33), which is taken into account when determining the azimuthal angle (aG) of the geographical north pole.

6. Goniometer (1) according to any one of the preceding claims,
**characterized in that**
the goniometer (1) is integrated into the sighting device (10) or into a stand (11), the rotary part (3) being connected in a fixed fashion to the sighting device (10) or the base (2) being connected in a fixed fashion to the stand (11).

7. Goniometer (1) according to any one of the preceding claims,
**characterized in that**
the goniometer (1) is equipped with a data transmission interface, the evaluation unit (4) being configured in such a way that, by means of the data transmission interface, it combines the azimuthal orientation with external measurement values, the external measurement values coming in particular from a mounted sighting device (10).

8. Goniometer (1) according to any one of the preceding claims,
**characterized by**

an additional inclination meter for

- support with an approximately vertical orientation of the upright axis (34), in particular with an angular deviation of less than five degrees, and for
- monitoring the support of the goniometer (1) with respect to movement or displacement of the base (2) and an invalidation due thereto of the referencing to the geographical north pole (44).

9. System for nonmagnetically north-referenced sighting, comprising

- a goniometer (1) according to any one of Claims 1 to 8,
- a sighting device (10), in particular an observation instrument, especially having an elevation and range measuring device, and
- a stand (11) for ground-based support of the goniometer (1).

10. Process for azimuthal angle determination relative to the geographical north pole, in particular with a goniometer (1) according any one of Claims 1 to 8, the process comprising the following steps:

- determination of a rotational position of a rotary part (3), which can be rotated relative to a ground-based supported base (2) about an upright axis (34) and on which a sighting device (10) can be mounted so that it can be rotated together with the rotary part (3), with a rotation angle encoder,
- determination of a component (rHE) of the Earth rotation vector oriented orthogonally to the upright axis (34) in a rotational position, with a gyroscope (310) fixed on the rotary part (3),
- determination of the azimuthal angle (aG) of the geographical north pole (44) with the aid of an orientation of the component (rHE) of the Earth rotation vector with an evaluation unit (4),

**characterized by**
the following further process steps:

- determination of a sink rate of the rotary part (3) relative to the ground (12) with the aid of an acceleration value oriented orthogonally to the orientation of the component (rHE) of the Earth rotation vector determined by the gyroscope with an acceleration sensor (320) fixed on the rotary part (3), by the evaluation unit (4),
- correction of the determined component (rHE) of the Earth rotation vector by the ascertained sink rate,
- sequential manual rotation of the rotary part (3) into at least three different rotational positions, which lie in at least three predetermined rotational position ranges (36a, 36b, 36c), the determination of the component (rHE) of the Earth rotation vector, determination of the sink rate and compensation for the sink rate in each case being carried out in the at least three rotational positions, the rotational positions in each case being determined as measurement value with the rotation angle encoder,
- correction of a systematic measurement error, in particular a measurement value offset, of the gyroscope (310) and an orientation of the Earth rotation vector by combining the component (rHE) of the Earth rotation vector from the at least three rotational positions by the evaluation unit, wherein the measurement values of the rotational positions which are associated with the component (rHE) of the Earth rotation vector and have been determined with the rotation angle encoder are taken into consideration by the evaluation unit (4).

11. Process according to Claim 10, **characterized by** user guidance of the manual rotation by the evaluation unit by means of display, especially with, by the user guidance, the rotational position ranges (36a, 36b, 36c) being predetermined in such a way that they are distributed at least approximately uniformly around the upright axis (34) and, in particular, have a range width of +/- 10 degrees, especially +/- 5 degrees.

12. Process according to either one of Claims 10 and 11,
**characterized by**
determination of an expectation value of an accuracy of the determination of the azimuthal angle (aG) of the geographical north pole (44) by the evaluation unit (4), in particular with provision of the expectation value as an accuracy estimation value for a user.

13. Process according to any one of Claims 10 to 12,
**characterized by**
detection of a movement or displacement of the base with the aid of measurement values of an additional inclination meter by the evaluation unit and output of a warning relating to an invalidation possibly due thereto of the referencing of the azimuthal angle (aG) of the geographical north pole (44).

14. Process according to any one of Claims 10 to 13,
**characterized by**
determination of an inclination of the upright axis (34) relative to a vertical with the aid of an acceleration measurement and incorporation of this inclination into the determination of the azimuthal angle (aG) of the geographical north pole (44) by the evaluation unit.

15. Computer program product comprising program code, which is stored on a machine-readable medium, or computer data signal embodied by an electromagnetic wave, for carrying out the process according to any one of Claims 10 to 14, in particular wherein the program code allows guidance of the user for manual rotation of a rotary part (3) into rotational positions within at least three predetermined rotational position ranges (36a, 36b, 36c), when the program is executed in an evaluation unit of a north-referenceable goniometer (1) according to any one of Claims 1 to 9.

**Revendications**

1. Goniomètre (1) pouvant être référencé au Nord pour déterminer une orientation azimutale d'un dispositif de visée (10), comportant

   • un socle (2) destiné à être mis en place de façon liée au sol,
   • une partie tournante (3) pouvant tourner en azimut autour d'un axe vertical (34) par rapport au socle (2), qui est conçue de telle sorte que le dispositif de visée (10) puisse être monté de manière à ce qu'il puisse tourner en association avec la partie tournante (3),
   • un codeur d'angle de rotation destiné à déterminer une position en rotation de la partie tournante (3) autour de l'axe vertical (34),
   • un gyroscope (310) fixé sur la partie tournante (3), avec une direction de mesure (21, 31) orienté perpendiculairement à l'axe vertical (34), pour la détermination d'une composante (rHE) du vecteur de rotation terrestre, et
   • une unité d'évaluation (4) destinée à déterminer l'angle d'azimut (aG) du pôle Nord géographique (44) sur la base d'une orientation de la composante (rHE) du vecteur de rotation terrestre,

   **caractérisé en ce qu'**un capteur d'accélération (320) ayant une direction de mesure (22, 32) perpendiculaire à la direction de mesure (21) du gyroscope est fixé sur la partie tournante (3) et **en ce que** l'unité d'évaluation (4) est conçue pour

   • corriger la composante déterminée (rHE) du vecteur de rotation terrestre d'un taux de chute du goniomètre (1) déterminé à partir du capteur d'accélération (320), et
   • corriger une erreur de mesure systématique du gyroscope (320),

   au moyen de l'unité d'évaluation (4), en déterminant des valeurs de mesure de la composante (rHE) du vecteur de rotation terrestre en au moins trois positions de rotation différentes respectivement déterminées par le codeur d'angle de rotation en tant que valeur de mesure de position angulaire, lesquelles positions de rotation se situent dans au moins trois plages de positions angulaires prédéterminées (36a, 36b, 36c), dans lequel les valeurs de mesure des positions de rotation appartenant à la composante (rHE) du vecteur de rotation terrestre sont prises en compte par l'unité d'évaluation (4).

2. Goniomètre (1) selon la revendication 1, **caractérisé en ce que** l'unité d'évaluation (4) est réalisée de manière à indiquer à un utilisateur au moyen d'un afficheur, sur la base d'une assistance apportée à l'utilisateur, le fait que des plages de positions angulaires prédéterminées sont atteintes ou la rotation nécessaire à cet effet, de manière à ce que des positions de rotation puissent être amenées à l'intérieur des plages de positions angulaires prédéterminées (36a, 36b, 36c) par mise en rotation manuelle de la partie tournante (3), notamment dans lequel les plages de positions angulaires (36a, 36b, 36c) sont prédéterminées de manière à ce que l'erreur de mesure systématique puisse être déterminée en tant que décalage des valeurs de mesure du gyroscope (310).

3. Goniomètre (1) selon l'une quelconque des revendications précédentes, **caractérisé en ce que** la partie tournante (3) du goniomètre (1) peut être mise en rotation manuellement, notamment dans lequel le dispositif de visée (10) peut être monté uniquement à une position de rotation prédéterminée sur la partie tournante (3), et plus précisément, dans lequel une position de rotation d'un dispositif de visée monté (10) peut être déterminée au moyen du codeur d'angle de rotation du goniomètre (1).

4. Goniomètre (1) selon l'une quelconque des revendications précédentes, **caractérisé en ce que** les plages de positions angulaires (36a, 36b, 36c) sont réparties au moins approximativement de manière équidistante autour de l'axe vertical (34) du goniomètre, notamment avec une distance angulaire moyenne d'au moins approximativement 120 degrés et une largeur de plage de +/-10 degrés, et plus précisément, de +/-5 degrés.

5. Goniomètre (1) selon l'une quelconque des revendications précédentes, **caractérisé en ce que** l'unité d'évaluation (4) est réalisée de manière à ce que, auxdites au moins trois positions de rotation, une inclinaison de l'axe vertical (34) par rapport à une verticale (33) puisse être déterminée sur la base de valeurs de mesure du capteur d'accélération, laquelle inclinaison est introduite lors de la détermination de l'angle d'azimut (aG) du pôle Nord géographique.

6. Goniomètre (1) selon l'une quelconque des revendications précédentes, **caractérisé en ce que** le goniomètre (1) est intégré dans le dispositif de visée (10) ou dans un trépied (11), dans lequel la partie tournante (3) est solidement reliée au dispositif de visée (10) ou dans lequel le socle (2) est solidement relié au trépied (11).

7. Goniomètre (1) selon l'une quelconque des revendications précédentes, **caractérisé en ce que** le goniomètre (1) est doté d'une interface de transmission de données, dans lequel l'unité d'évaluation (4) est conçue de manière à combiner l'orientation azimutale à des valeurs de mesure externes au moyen de l'interface de transmission de données, notamment dans lequel les valeurs de mesure externes proviennent d'un dispositif de visée (10) monté.

8. Goniomètre (1) selon l'une quelconque des revendications précédentes, **caractérisé par** un inclinomètre supplémentaire destiné à

   • la mise en place avec une orientation approximativement verticale de l'axe vertical (34), notamment avec un écart angulaire inférieur à cinq degrés, et destiné à
   • une surveillance de la mise en place du goniomètre (1) en ce qui concerne un mouvement ou un déplacement du socle (2) et une invalidation qui en résulte du référencement par rapport au pôle Nord géographique (44).

9. Système destiné à effectuer une visée non magnétique référencée au Nord comprenant

   • un goniomètre (1) selon l'une quelconque des revendications 1 à 8,
   • un dispositif de visée (10), notamment un appareil d'observation, comportant en particulier un dispositif de mesure d'élévation et de distance, et
   • un trépied (11) destiné à la mise en place liée au sol du goniomètre (1).

10. Procédé de détermination d'angle d'azimut par rapport au pôle Nord géographique, comportant notamment un goniomètre (1) selon l'une quelconque des revendications 1 à 8, dans lequel le procédé comprend les étapes de procédé suivantes :

   • déterminer une position de rotation d'une partie tournante (3) pouvant tourner autour d'un axe vertical (34) par rapport à un socle mis en place de façon liée au sol (2), sur laquelle un dispositif de visée (10) peut être monté de manière à ce qu'il puisse être mis en rotation en association avec la partie tournante (3), comportant un codeur d'angle de rotation,
   • déterminer une composante (rHE) du vecteur de rotation terrestre orientée perpendiculairement à l'axe vertical (34) à une position de rotation, comportant un .gyroscope (310) fixé sur la partie tournante (3),
   • déterminer l'angle d'azimut (aG) du pôle Nord géographique (44) sur la base d'une orientation de la composante (rHE) du vecteur de rotation terrestre au moyen d'une unité d'évaluation (4),

   **caractérisé par** les autres étapes de procédé suivantes :

   • déterminer au moyen de l'unité d'évaluation (4) un taux de chute de la partie tournante (3) par rapport à la Terre (12), sur la base d'une valeur d'accélération orientée perpendiculairement à l'orientation de la composante (rHE) déterminée par le gyroscope du vecteur de rotation terrestre, avec un capteur d'accélération (320) fixé sur la partie tournante (3),
   • corriger la composante (rHE) déterminée du vecteur de rotation terrestre du taux de chute obtenu,
   • faire tourner manuellement de manière séquentielle la partie tournante (3) en au moins trois positions de rotation différentes, qui se situent dans au moins trois plages de positions angulaires prédéterminées (36a, 36b, 36c), dans lequel la détermination de la composante (rHE) du vecteur de rotation terrestre, la détermination du taux de chute et la compensation du taux de chute sont respectivement effectuées auxdites au moins trois positions de rotation, dans lequel les positions de rotation sont respectivement déterminées en tant que valeur de mesure au moyen du codeur d'angle de rotation,
• corriger un erreur de mesure systématique, notamment un décalage des valeurs de mesure, du gyroscope (310) et une orientation du vecteur de rotation terrestre en combinant la composante (rHE) du vecteur de rotation terrestre à partir des au moins trois des positions de rotation au moyen de l'unité d'évaluation, dans lequel une prise en compte des valeurs de mesure des positions de rotation appartenant à la composante (rHE) du vecteur de rotation terrestre, déterminées au moyen du codeur d'angle de rotation, est effectuée par l'unité d'évaluation (4).

11. Procédé selon la revendication 10, **caractérisé par** une assistance apportée à l'utilisateur par l'unité d'évaluation au moyen d'un afficheur pour la rotation manuelle, et plus précisément, dans lequel les plages de positions angulaires (36a, 36b, 36c) sont prédéterminées par l'assistance apportée à l'utilisateur de manière à ce qu'elles soient au moins approximativement uniformément réparties autour de l'axe vertical (34) et présentent notamment une largeur de plage de +/-10 degrés, et plus précisément, de +/-5 degrés.

12. Procédé selon l'une quelconque des revendications 10 ou 11, **caractérisé par** la détermination d'une valeur attendue d'une précision de la détermination de l'angle d'azimut (aG) du pôle Nord géographique (44) par l'unité d'évaluation (4), comportant notamment la fourniture de la valeur attendue sous la forme d'une valeur de précision estimée destinée à un utilisateur.

13. Procédé selon l'une quelconque des revendications 10 à 12, **caractérisé par** la détection d'un mouvement ou d'un déplacement du socle sur la base des valeurs de mesure d'un inclinomètre supplémentaire par l'unité d'évaluation et l'émission d'une alarme concernant une invalidation pouvant éventuellement en résulter du référencement de l'angle d'azimut (aG) du pôle Nord géographique (44).

14. Procédé selon l'une quelconque des revendications 10 à 13, **caractérisé par** une détermination d'une inclinaison de l'axe vertical (34) par rapport à une verticale sur la base d'une mesure d'accélération et par la prise en compte de ladite inclinaison dans la détermination de l'angle d'azimut (aG) du pôle Nord géographique (44) par l'unité d'évaluation.

15. Produit de programme d'ordinateur comportant un code de programme qui est stocké sur un support lisible par machine, ou signal de données d'ordinateur mis en oeuvre par une onde électromagnétique, pour mettre en oeuvre le procédé selon l'une quelconque des revendications 10 à 14, notamment dans lequel le code de programme permet d'apporter une assistance à l'utilisateur pour la rotation manuelle d'une partie tournante (3) à des positions de rotation se situant à l'intérieur d'au moins trois plages de positions angulaires prédéterminées (36a, 36b, 36c) lorsque le programme est exécuté dans une unité d'évaluation d'un goniomètre pouvant être référencé au Nord (1) selon l'une quelconque des revendications 1 à 9.

Fig. 1

Fig. 2

40

$r_{EH}$

N

$a_G$

$x_S$

e

x

10

1

11

*Fig. 3*

41

$r_E$

42

44

43

41

$r_{HE}$

$r_E$

$r_{HE}$ $a_G$

x

42

y

*Fig. 4*

*Fig. 5*

Fig. 6

Fig. 7

Fig. 8

Fig. 9

$\mathfrak{Fig.}\ 10$

21+22

1

50

Δ h

d

fix                    fix

*Fig. 11*

32

22

21

31

*Fig. 12*

N

$r_{HE}$        $r'_{HE}$

51

22

*Fig. 13*

22

$r_w = dw/dt$

dw

32

31

21

w

Fig. 14

61

150

100

60

50

0

-50

-100

-150

0   50   100   150   200   250   300   350   400   450   500

62

Fig. 15

Fig. 16

Fig. 17

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4945647 A
- EP 0250608 A
- DE 3141405
- EP 2239540 A
- CA 1269874
- EP 0790485 A

**In der Beschreibung aufgeführte Nicht-Patentliteratur**

- **W.H.PRESS.** Numerical Recipes. Cambridge University Press, 2007